(19) 

**Europäisches Patentamt**
**European Patent Office**
**Office européen des brevets**

(11) **EP 4 622 129 A1**

(12) # EUROPEAN PATENT APPLICATION

(43) Date of publication:
24.09.2025 Bulletin 2025/39

(21) Application number: 25164559.4

(22) Date of filing: 18.03.2025

(51) International Patent Classification (IPC):
*H04B 7/0456* (2017.01)    *H04B 7/06* (2006.01)

(52) Cooperative Patent Classification (CPC):
**H04B 7/0456; H04B 7/0602; H04B 7/0617;**
**H04B 7/0671**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.03.2024 KR 20240036978**

(71) Applicant: **AJOU UNIVERSITY INDUSTRY-**
**ACADEMIC**
**COOPERATION FOUNDATION**
**Gyeonggi-do 16499 (KR)**

(72) Inventor: **OH, Seong Keun**
**16950 Yongin-si (KR)**

(74) Representative: **Plasseraud IP**
**104 Rue de Richelieu**
**CS92104**
**75080 Paris Cedex 02 (FR)**

(54) **APPARATUS AND METHOD OF BEAM-SWITCHING BASED ON BEAM-BRIDGING**

(57) The disclosed provides a beam-switching apparatus and method that generates and uses a bridging beam to cover the boundary region between a pre-switching directional beam and a target directional beam for beam-switching during beam-switching, enabling smoother transition and eliminating beam-edge effects in a communication system using directional beams.

**EP 4 622 129 A1**

## Description

## BACKGROUND

Field

The embodiment relates to an apparatus and method of beam-bridging beam-switching.

Description of Related Art

In recent mobile communication methods that have been developed or are being developed, such as 5G NR (New Radio), 6G (6th-Generation), which use millimeter-wave bands or terahertz bands, a plurality of beams are used for both base stations and terminal devices for purposes of securing the link budget and of interference suppression due to signal attenuation and other factors.

These methods are equipped with a beam codebook consisting of a predetermined number of directional beams as components, and maintain a communication link through beam-switching between adjacent or non-adjacent directional beams as needed. In a communication system using directional beams based on a beam codebook, as the number of directional beams constituting the beam codebook increases, the number of beam- switchings between directional beams also increases due to the movement of at least one of a reference communication device and a target communication device. Issues arising from the increase in the number of beam-switchings will need separate solutions to be devised.

However, in the case of ping-pong beam-switching events occurring around boundary regions between directional beams, severe performance degradation of the communication link occurs due to beam-edge effects such as communication link performance degradation and communication link disconnection at beam edges. Furthermore, frequent beam-switchings between directional beams in boundary regions not only cause communication quality degradation such as communication link performance degradation, communication link disconnection etc. at beam edges, but also significantly undermines communication link stability, service stability, and/or system efficiency by causing an excessive system load, processing delays, a resource loss, and an excessive power consumption. In particular, when not only the reference communication device but also the target communication device are both located in their respective boundary regions of directional beams, a serious situation may arise, in which ping-pong beam-switching of directional beams for the reference communication device as well as ping-pong beam-switching of directional beams for the target communication device must be simultaneously resolved. In this situation, communication link quality, communication link stability, and service stability rapidly deteriorate, and in severe cases, it may lead to communication link disconnection, service delay, and service interruption.

Finally, while the ping-pong beam-switching problem in boundary regions between directional beams may be a relatively old issue, as the number of directional beams constituting a beam codebook increases, the number of boundary regions between directional beams within a given communication area also increases proportionally. Therefore, this leads to a proportional rise in the number of ping-pong beam-switchings to be handled in the communication system, making the problem severer.

[Prior Art Documents]

[Patent Documents]

(Patent Document 1) Korean Patent Publication No. 10-2004-0059657 (July 6, 2004), "Method and Apparatus for Wireless Communication Using High-Speed Scanning of Antenna Radiation Beam"

## SUMMARY

The embodiment aims to disclose a bridging beam-switching apparatus or method that constructs a beam-switching beam set consisting of two directional beams participating in beam-switching among a plurality of directional beams that can be generated through an antenna part, generates a bridging beam covering the boundary region between beam-switching beam set entities, and performs beam-switching from one directional beam of the beam-switching beam set entities to the bridging beam.

According to one embodiment, a bridging beam-switching apparatus for switching directional beams, comprises an antenna part configured to generate a plurality of directional beams; a transceiver part configured to supply signals to or receive signals from the antenna part; and a control part configured to control directional beam generation of the antenna part and signal transmission/reception of the transceiver part; wherein the control part: constructs a beam-switching beam set participating in beam-switching, that includes a first entity being a pre-switching directional beam and a second entity being a target directional beam for beam-switching, among a plurality of directional beams that can be generated through the antenna part, generates a bridging beam covering the boundary region between the first entity and the second entity of the beam-switching beam set, and switches from either the first entity or the second entity of the beam-switching beam set to the generated bridging beam.

Here, the bridging beam-switching is an operation in response to a ping-pong beam-switching request event between the beam-switching beam set entities.

Here, the ping-pong beam-switching request event is either: an event in which mutual beam-switching requests between the beam-switching beam set entities of a preset count of at least 2 occur, without beam-switching to a directional beam not included in the beam-switching beam set within a preset time; or an event in which alternating beam-switching requests between the beam-switching beam set entities of a preset count of at least 1 occur, and the count of alternating beam-switching requests between the beam-switching beam set entities is one less than the count of mutual beam-switching requests occurring between the beam-switching beam set entities regardless of switching direction, without beam-switching to a directional beam not included in the beam-switching beam set within the preset time.

Here, the bridging beam is a directional beam whose direction and beamwidth are set to eliminate beam-edge effects and/or occurrence of ping-pong beam-switching request events, in the boundary region between the beam-switching beam set entities.

Here, a direction of the bridging beam is: positioned between a direction of the first entity of the beam-switching beam set and a direction of the second entity of the beam-switching beam set; or positioned at a boundary direction between the first entity and the second entity; or positioned at an intermediate direction between a direction of the first entity and a direction of the second entity; or positioned at a direction closer to either a direction of the first entity or a direction of the second entity; or positioned at a direction between a direction of the first entity and a direction of the second entity according to a predefined rule.

Here, the boundary direction between the first entity and the second entity is: a direction of directional angle where a directional gain of the first entity and a directional gain of the second entity is identical; or a direction corresponding to the boundary of the first entity; or a direction corresponding to the boundary of the second entity.

Here, a beamwidth of the bridging beam: covers the boundary region between the first entity and the second entity of the beam-switching beam set, and has either the same value as one of a beamwidth of the first entity of the bean-switching beam set and a beamwidth of the second entity of the beam-switching beam set; or has a value between a beamwidth of the first entity and a beamwidth of the second entity; or has a value larger than the larger value of a beamwidth of the first entity and a beamwidth of the second entity; or has a value smaller than the smaller value of a beamwidth of the first entity and a beamwidth of the second entity.

Here, the direction of the bridging beam or the beamwidth of the bridging beam is determined based on at least one of: a ping-pong beam-switching request event count per unit time, a movement speed (including a velocity), a relative movement speed (including a relative velocity), a distance between communication devices, a range of directional angle due to movement during a predetermined period, and a relative range of directional angle due to movement.

Here, during beam-bridging while using the bridging beam as a serving beam: releases beam-bridging by switching from the bridging beam to one of the beam-switching beam set entities, in response to a switching request event from the bridging beam to one of the beam-switching beam set entities; or releases beam-bridging by switching from the bridging beam to a directional beam not included in the beam-switching beam set, in response to a switching request event from the bridging beam to a directional beam not included in the beam-switching beam set.

Here, each entity of the beam-switching beam set is: a component of a beam codebook consisting of a plurality of directional beams that can be generated through the antenna part, and the first entity and the second entity of the beam-switching beam set are either component of the beam codebook corresponding to directions adjacent to each other, or components of the beam codebook corresponding to directions non-adjacent to each other.

Here, in generating the bridging beam: determines a direction and a beamwidth of the bridging beam, generates a directional beam based on the determined direction and beamwidth of the bridging beam by applying beam generation parameters corresponding to an antenna array structure of the antenna part, and in determining the direction and beamwidth of the bridging beam, either: designates a beam codebook in use as a main beam codebook, provides an auxiliary beam codebook different from the main beam codebook, and determines the direction and beamwidth of the bridging beam by selecting a directional beam covering the boundary region between the first entity and the second entity, from the auxiliary beam codebook; or determines a direction and a beamwidth of the bridging beam to cover the boundary region between the first entity and the second entity according to a predefined rule.

Here, the antenna array structure of the antenna part is either an array antenna structure or a parasitic array structure, and the application of the beam generation parameters: for the array antenna structure case, is either adjustment of phase or simultaneous adjustment of gain and phase for each of individual array antenna elements; and for the parasitic array structure case, is either selection of at least one of predetermined beam spaces or adjustment of parameters controlling operation of passive elements of the parasitic array for synthesizing a desired beam.

According to one embodiment, a bridging beam-switching method performed by a beam-switching apparatus including an antenna part configured to generate a plurality of directional beams, a transceiver part configured to supply signals to or receive signals from the antenna part, and a control part controlling directional beam generation of the antenna part and signal transmission/reception of the transceiver part, the method comprising: constructing a beam-switching beam set participating in beam-switching, that includes a first entity being a pre-switching directional beam and a second entity being a target directional beam for beam-switching, among a plurality of directional beams that can be generated through the antenna part; generating a bridging beam covering the boundary region between the first entity and the second entity of the beam-switching beam set; and switching from either the first entity or the second entity of the beam-switching beam set to the generated bridging beam.

Here, the bridging beam-switching is an operation in response to a ping-pong beam-switching request event between the beam-switching beam set entities.

Here, the bridging beam is a directional beam whose direction and beamwidth are set to eliminate beam-edge effects and/or occurrence of ping-pong beam-switching request events in the boundary region between the beam-switching beam set entities.

Here, a direction of the bridging beam is: positioned between a direction of the first entity of the beam-switching beam set and a direction of the second entity of the beam-switching beam set; or positioned at a boundary direction between the first entity and the second entity; or positioned at an intermediate direction between a direction of the first entity and a direction of the second entity; or positioned at a direction closer to either a direction of the first entity or a direction of the second entity; or positioned at a direction between a direction of the first entity and a direction of the second entity according to a predefined rule.

Here, a beamwidth of the bridging beam: covers the boundary region between the first entity and the second entity of the beam-switching beam set, and has either the same value as one of a beamwidth of the first entity of the beam-switching beam set and a beamwidth of the second entity of the beam-switching beam set; or has a value between a beamwidth of the first entity and a beamwidth of the second entity; or has a value larger than the larger value of a beamwidth of the first entity and a beamwidth of the second entity; or has a value smaller than the smaller value of a beamwidth of the first entity and a beamwidth of the second entity.

Here, after beam-switching to the bridging beam: releases beam-bridging by switching from the bridging beam to one of the beam-switching beam set entities, in response to a beam-switching request event from the bridging beam to one of the beam-switching beam set entities during beam-bridging while using the bridging beam as a serving beam; or releases beam-bridging by switching from the bridging beam to a directional beam not included in the beam-switching beam set, in response to a beam-switching request event from the bridging beam to a directional beam not included in the beam-switching beam set during beam-bridging while using the bridging beam as a serving beam.

Here, generating the bridging beam comprises: determining a direction and a beamwidth of the bridging beam; and generating a directional beam based on the determined direction and beamwidth of the bridging beam by applying beam generation parameters corresponding to an antenna array structure of the antenna part; wherein determining the direction and beamwidth of the bridging beam comprises: designating a beam codebook in use as a main beam codebook and providing an auxiliary beam codebook different from the main beam codebook; determining the direction and beamwidth of the bridging beam by selecting a directional beam covering the boundary region between the first entity and the second entity, from the auxiliary beam codebook; or determining a direction and a beamwidth of the bridging beam to cover the boundary region between the first entity and the second entity according to a predefined rule.

Here, beam-switching to the bridging beam comprises: deactivating a serving beam in use among the beam-switching beam set entities, setting the bridging beam as an active directional beam, and then designating the bridging beam as a new serving beam; or setting the bridging beam as an active directional beam, deactivating a serving beam in use, and then designating the bridging beam as a new serving beam; or setting the bridging beam as an active directional beam, designating the bridging beam as a new serving beam, and then deactivating a serving beam in use.

The embodiment can eliminate beam-edge effects such as communication link performance degradation, communication link disconnection at beam edges by removing boundary regions or edges between directional beams participating in beam-switching through beam-bridging, in beam-switching between directional beams within a beam codebook.

According to the embodiment, particularly in boundary regions between directional beams, it can maximize transmission efficiency and service quality by not only improving communication quality but also by securing communication link stability and service stability through eliminating ping-pong beam-switching request events that cause communication link performance degradation, communication link disconnection, excessive system load, processing delays, resource loss, excessive power consumption, etc., and it can also minimize system load due to beam-switching, thus simplifying system operation.

**BRIEF DESCRIPTION OF THE DRAWING**

The accompanying drawings, which are included to provide a further understanding of the present disclosure and constitute a part of the detailed description, illustrate embodiments of the present disclosure and serve to explain technical features of the present disclosure together with the description.

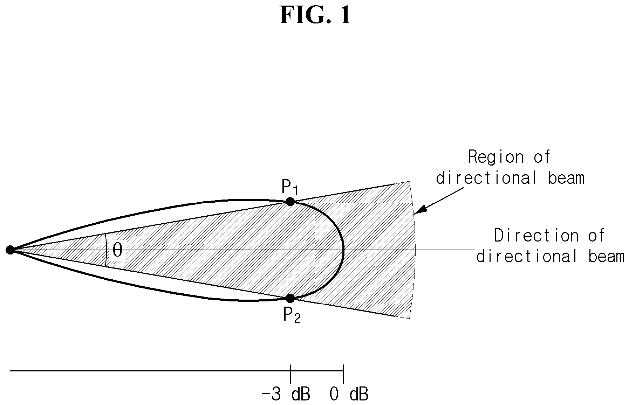

Fig. 1 shows an exemplary region of directional beam.

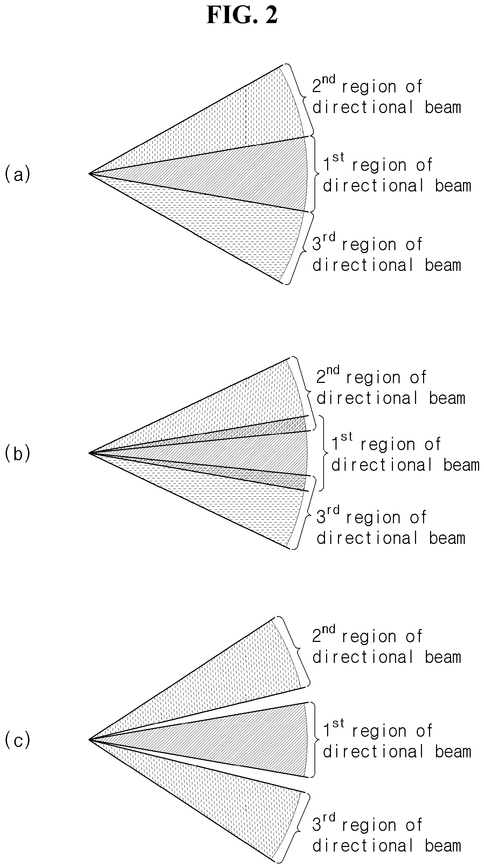

(a), (b) and (c) of fig. 2 show design examples of beam regions for directional beams constituting a beam codebook.

Fig. 3 is a schematic diagram showing the communication environment of a reference communication device and a target communication device using directional beams.

Fig. 4 is a block diagram of a reference communication device according to one embodiment.

Fig. 5 is a block diagram of a reference communication device according to another embodiment.

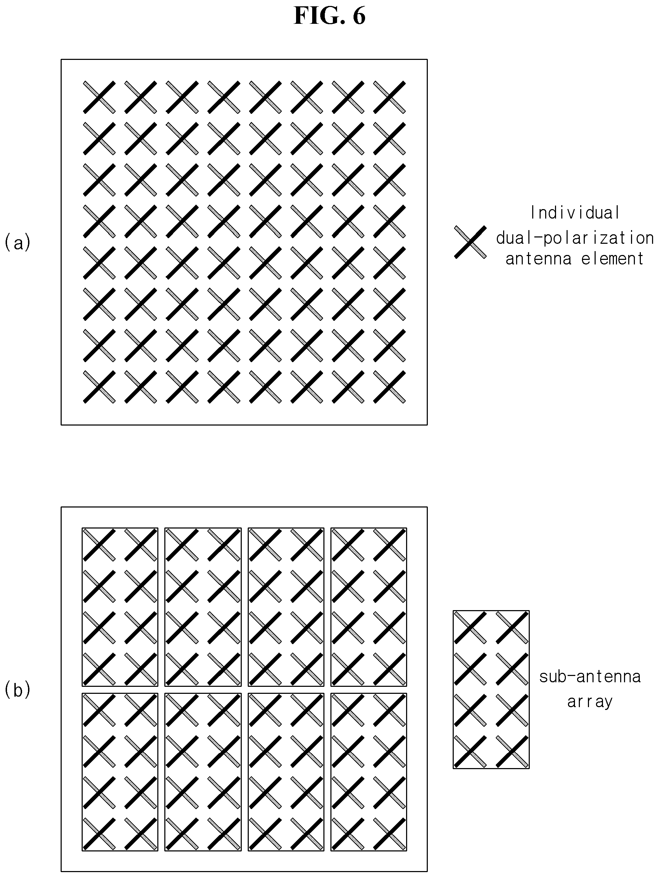

(a) of fig. 6 shows an example of array antenna configuration. (b) of fig. 6 shows an example of array antenna configuration consisting of a plurality of array antenna sets.

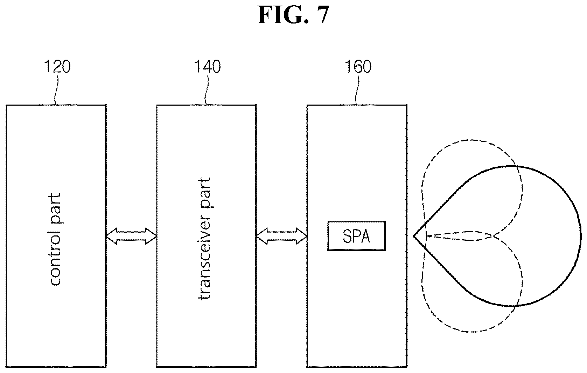

Fig. 7 is a block diagram of a reference communication device using parasitic array structure.

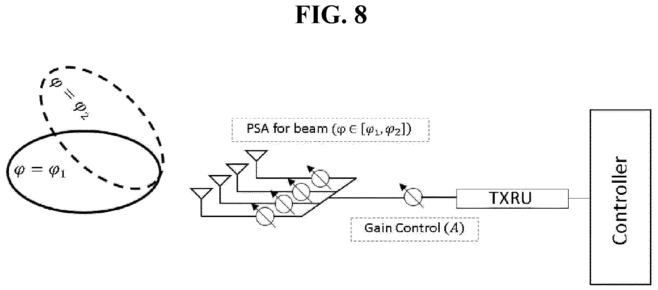

Fig. 8 shows the configuration of a bridging beam-switching apparatus according to one embodiment.

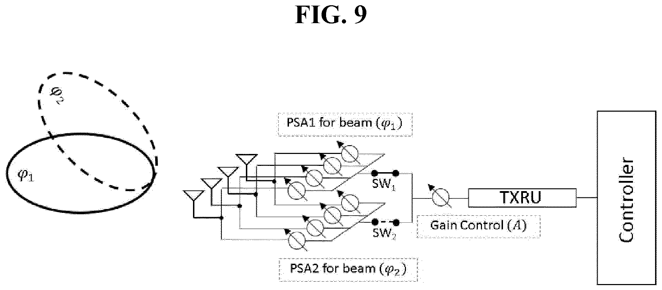

Fig. 9 shows the configuration of a bridging beam-switching apparatus according to another embodiment.

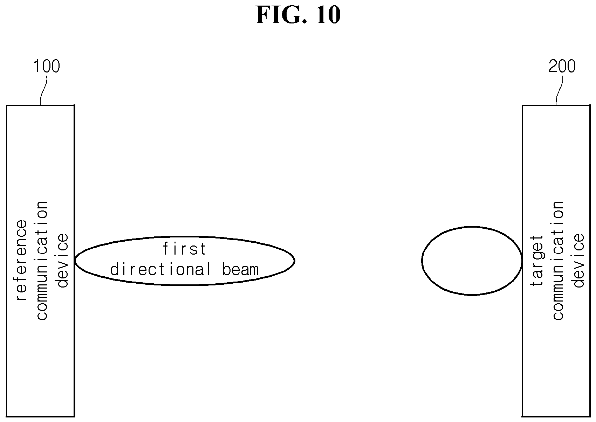

Fig. 10 shows an example of directional communication between a reference communication device and another device.

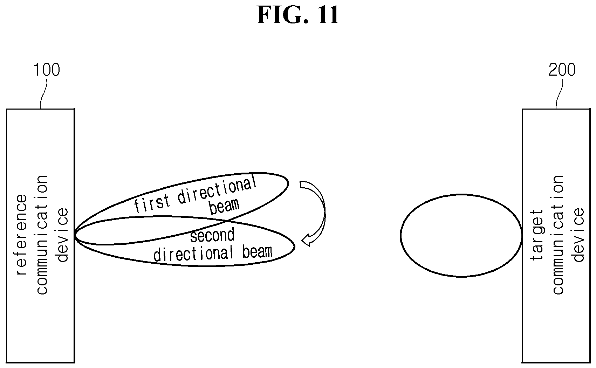

Fig. 11 shows a beam-switching communication environment and an example of beam-switching beam set configuration.

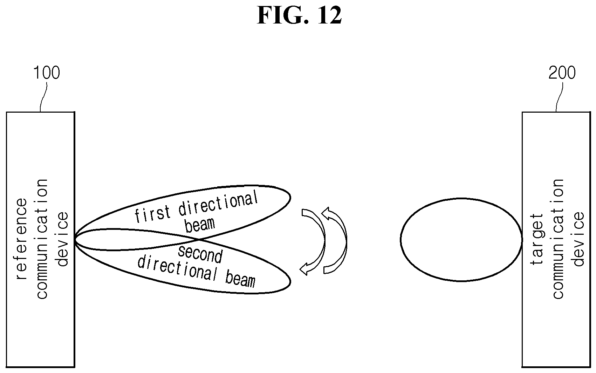

Fig. 12 shows an example of ping-pong beam-switching, and an associated example of beam-switching beam set configuration.

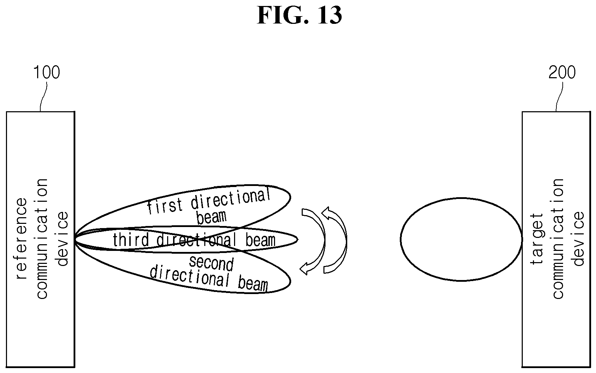

Fig. 13 shows an example of another beam-switching beam set configuration.

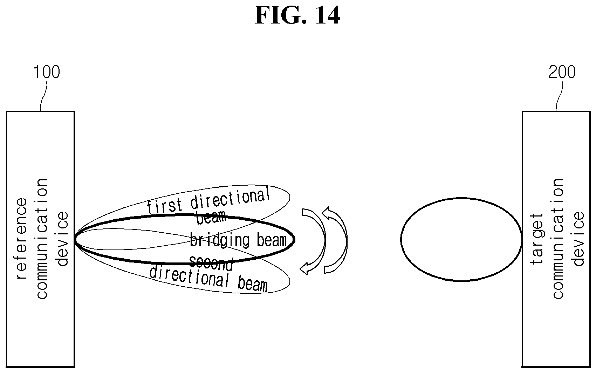

Fig. 14 shows an example of bridging beam generation according to one embodiment.

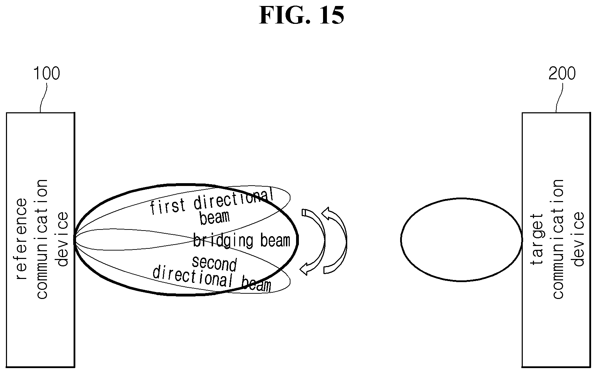

Fig. 15 shows an example of bridging beam generation according to another embodiment.

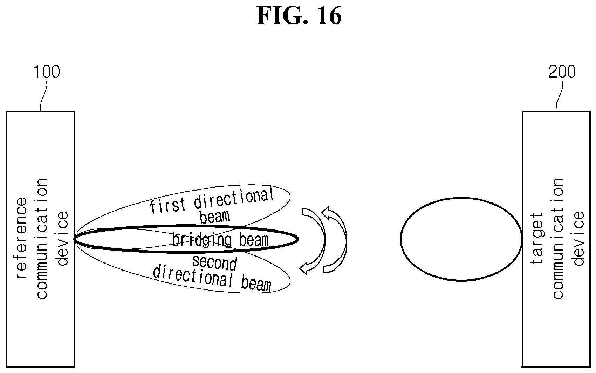

Fig. 16 shows an example of bridging beam generation according to yet another embodiment.

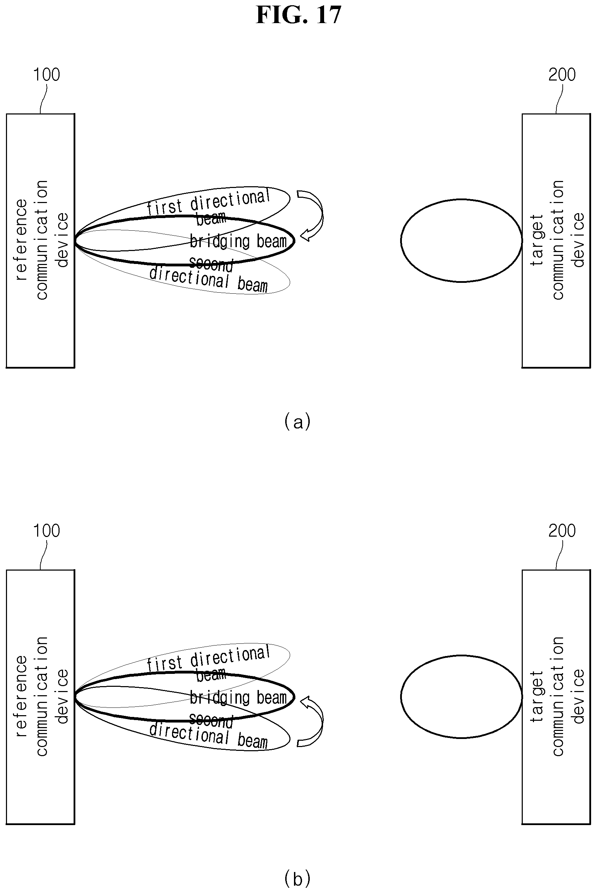

(a) and (b) of fig. 17 show examples of bridging beam-switching according to one embodiment.

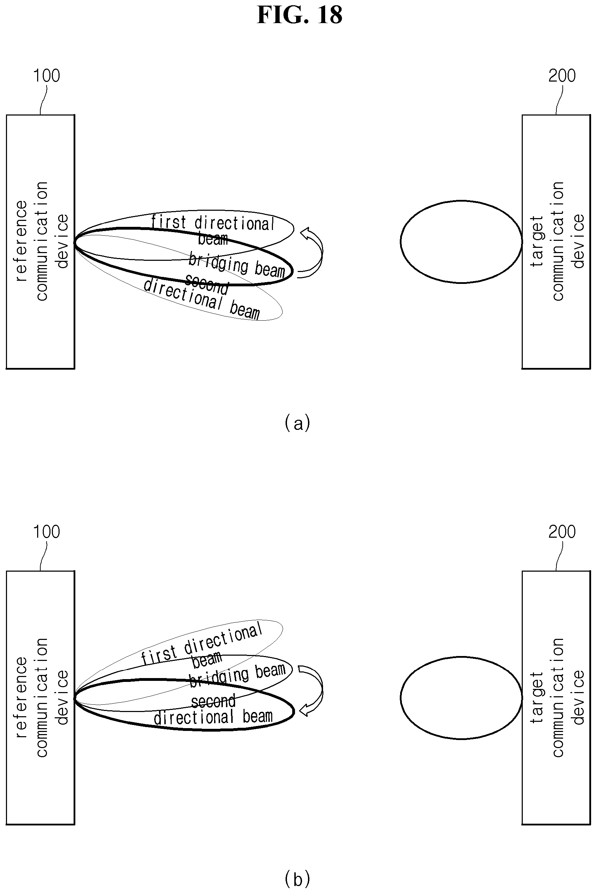

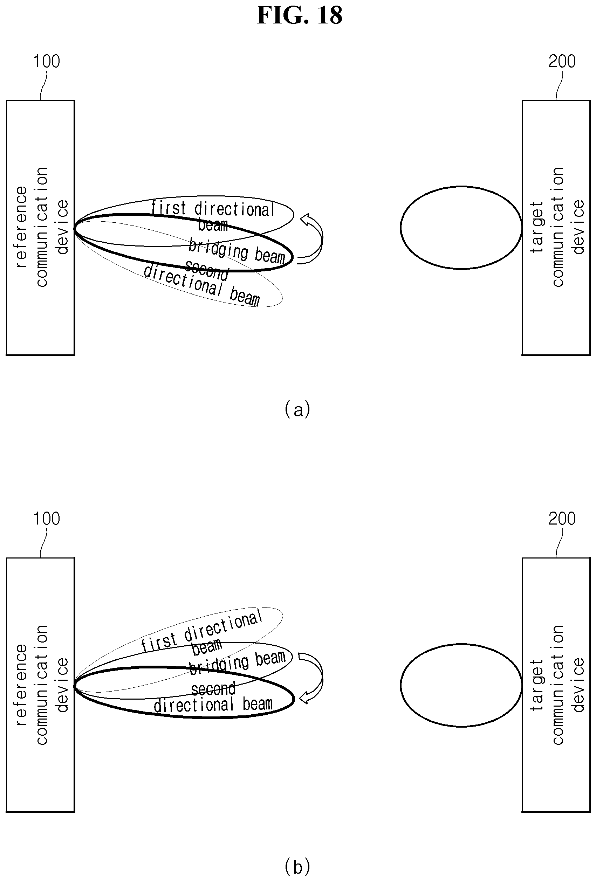

(a) and (b) of fig. 18 show examples of bridging release beam-switching according to one embodiment.

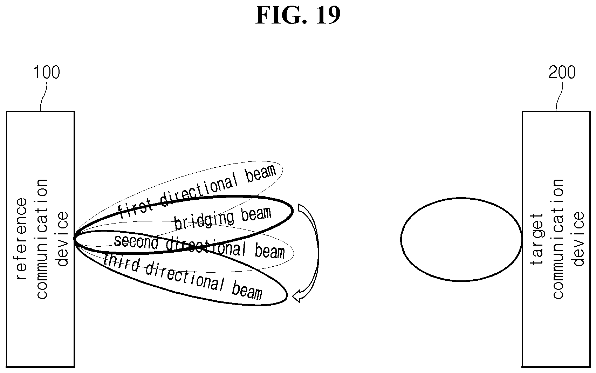

Fig. 19 shows an example of bridging release beam-switching according to another embodiment.

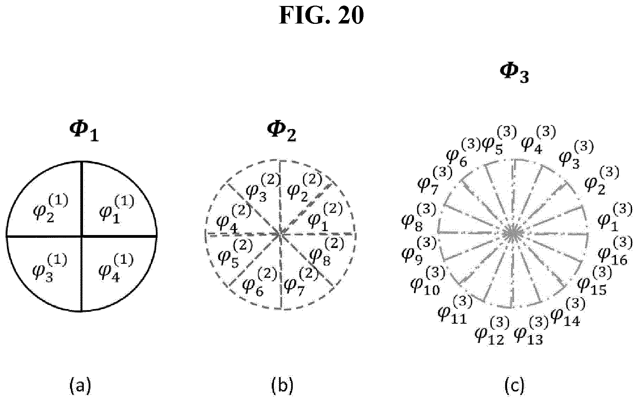

(a), (b) and (c) of fig. 20 show examples of beam codebook configuration.

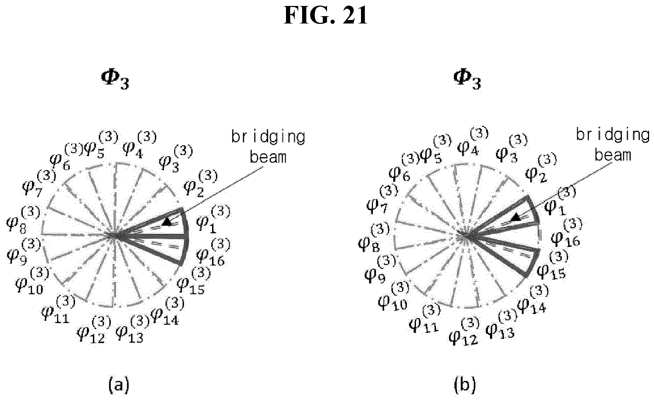

(a) and (b) of fig. 21 show examples of beam-switching beam set configuration using beam codebook according to one embodiment.

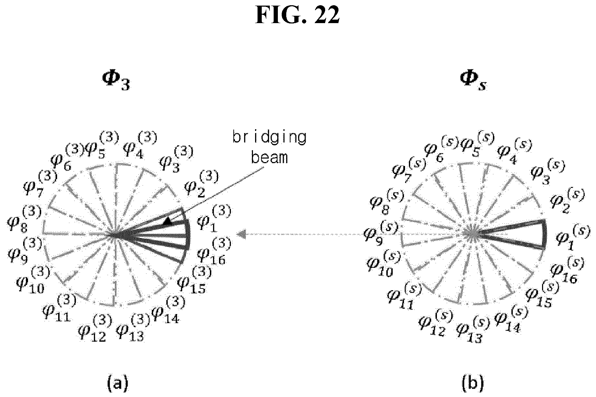

(a), (b) of fig. 22 show examples of beam-switching beam set configuration using beam codebook according to another embodiment.

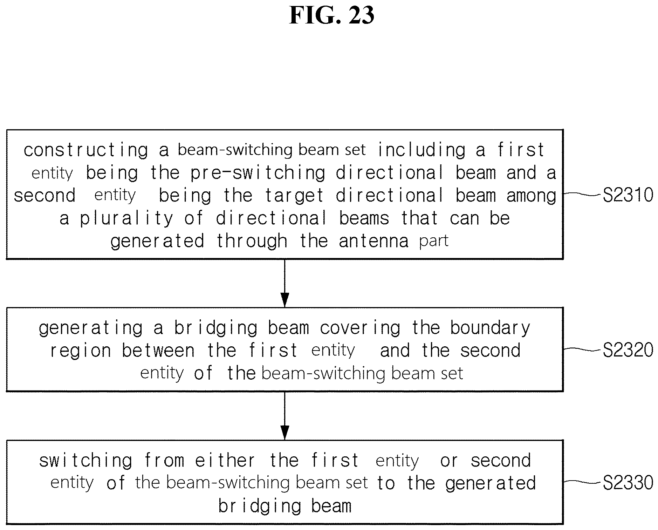

Fig. 23 is a flowchart of the bridging beam-switching method according to the embodiment.

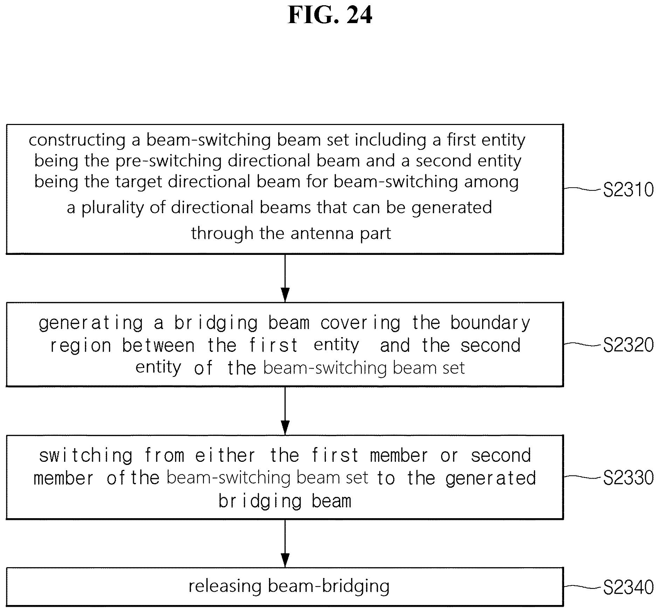

Fig. 24 is a flowchart of the bridging beam-switching method according to another embodiment.

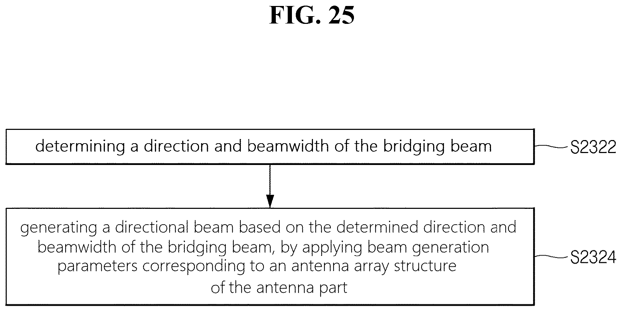

Fig. 25 is a flowchart detailing the step of bridging beam generation in fig. 23.

## DETAILED DESCRIPTION

In explaining the embodiments in this specification, if it is determined that detailed description of well-known technologies related to this specification may unnecessarily obscure the essence of this specification, such detailed description will be omitted. Furthermore, the terms used hereinafter are defined considering their functions in this specification and may vary according to user's, operator's intention or practice. Therefore, their definition should be made based on the overall content throughout this specification. Unless clearly used differently, singular forms include plural meanings. In this description, terms like "include" or "comprise" are used to indicate the existence of stated features, numbers, steps, operations, elements, parts or combinations thereof, and it should not be construed as precluding the existence or possibility of addition of one or more other features, numbers, steps, operations, elements, parts or combinations thereof.

Terms like "first", "second" etc. that include ordinal numbers can be used to explain various components, but said components are not limited by these terms. These terms are only used to distinguish one component from another component, and can be used only with nominal meanings without implying any sequential meaning, and their mutual sequential meaning is understood through the context of the relevant description.

The term "and/or" is used to include any and all combinations of a plurality of listed items. For example, "A and/or B" includes all three cases: "A", "B", and "A and B".

When one component is referred to as being "connected" or "coupled" to another component, it should be understood that it may be directly connected or coupled to the other component, but there may also exist intermediate components in between.

According to this specification, the embodiment can be implemented through various means, for example, hardware, firmware, software, or combinations thereof. In the case of hardware implementation, one embodiment of this specification can be implemented by one or more ASICs (application specific integrated circuits), DSPs (digital signal processors), DSPDs (digital signal processing devices), PLDs (programmable logic devices), FPGAs (field programmable gate arrays), processor controllers, microcontrollers, microprocessors, etc. In the case of firmware or software implementation, one embodiment of this specification can be implemented in the form of modules, procedures, functions, etc. that perform the capabilities or operations described above. Software code can be stored in memory and driven by a processor. The memory can be located inside or outside the processor and can exchange data with the processor through various already known means.

First, let's organize some terms and then develop the main body.

*** Communication Device ***

A communication device manages communication connections and controls the transmission or reception of information or data with other devices or networks. For this purpose, the communication device can perform not only transmission or reception of information or data, but also information or data conversion, signal conversion, data modulation/demodulation, protocol conversion, routing, and switching between devices and/or networks, connection setup/maintenance/release between communication devices or between communication device and network, signal amplification and relaying, etc., thereby providing stable service.

Communication devices can include the reference communication device 100 and the target communication device 200. The reference communication device 100 is a communication device that communicates using directional beams and implements directional beam-bridging and bridging beam-switching proposed in this specification. The target communication device 200 is a communication device that is the target for data transmission and reception using directional beams by the reference communication device 100. The reference communication device 100 and the target communication device 200 each can include various types of devices such as base station devices or terminal devices or relay devices.

*** Direction of Directional Beam ***

The direction of a directional beam is a parameter indicating the representative direction that characterizes the radiation characteristics of a directional beam when radiating or receiving electromagnetic waves through at least one antenna. For the direction of a directional beam, it includes a direction having a maximum radiation of the directional beam, an middle direction of beamwidth section of the directional beam, and other representative directions for the directional beam. For other representative directions for the directional beam, it can include a weighted average direction of beamwidth section of the directional beam, an middle direction of the main lobe in the antenna pattern of the directional beam, the direction of the connection line between the reference communication device 100 and another device, etc.

Now, let's explain the specific implementation forms of this specification by referring to the drawings. The detailed description below is provided to help understand the methods, devices and/or entities described in this specification. However, this is just an example and this specification is not limited to this.

*** Beam Region of Directional Beam ***

Fig. 1 shows an exemplary region of a directional beam.

The beam region of a directional beam represents an area corresponding to an angular range having directional gain above a certain level, from the direction of the directional beam. As one embodiment, referring to fig. 1, defining the direction having a maximum radiation as the direction of the directional beam, the region (dark region in fig. 1) corresponding to the angular range between two directional angles (P1 and P2 in fig. 1) corresponding to directions whose power levels are reduced by 3dB from the maximum radiation level can be defined as the beam region of the directional beam.

In the case of a beam codebook consisting of a plurality of directional beams, the boundary regions of the beam regions of respective directional beams constituting the beam codebook can be designed to be adjacent to each other but not overlapping, or the beam regions can be designed to overlap each other, or the beam regions can be designed to have some gap between directional beams without being adjacent to each other.

(a), (b), (c) of Fig. 2 show design examples of beam regions for directional beams constituting a beam codebook.

As one embodiment, referring to (a), (b), (c) of Fig. 2, in (a) of fig. 2, the boundary regions of beam regions of respective directional beams constituting the beam codebook are designed to be adjacent to each other but not overlapping, in (b) of fig. 2, the beam regions are designed to overlap each other, and in (c) of fig. 2, the boundary regions of the beam regions are designed to have some gap between directional beams without being adjacent to each other, as shown.

*** Beamwidth of Directional Beam ***

The beamwidth of a directional beam is a parameter indicating how focused the energy radiated through at least one antenna is in a specified direction. This indicates the angular range where the beam's radiation intensity is above a certain threshold (generally specified as a certain portion of maximum radiation intensity). The representative beamwidth is a Half Power Beam-Width (HPBW), and it is the range of angles between points in which the radiated power of the beam becomes a half of its maximum value. That is, it is the angular range from the direction of the maximum beam power to the points on both sides, where the beam power is reduced to a half of the maximum value. As another important beamwidth is the main lobe beamwidth or the null-to-null beamwidth, which indicates the angular range between angles occupied by the main lobe of the antenna radiation pattern, and besides these, various other definitions can be also used depending on a user or a system. Furthermore, it goes without saying that the beam region of the corresponding directional beam can be defined as the beamwidth of the directional beam.

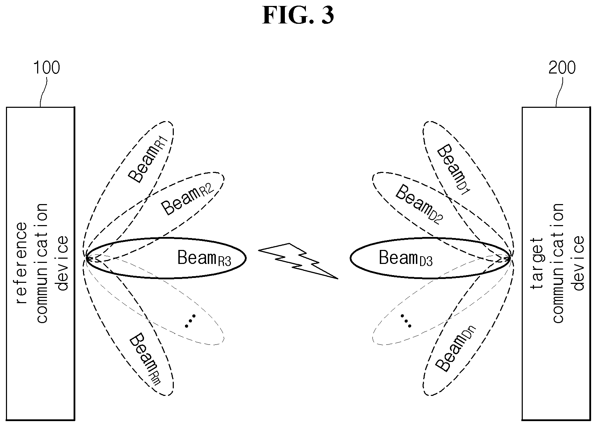

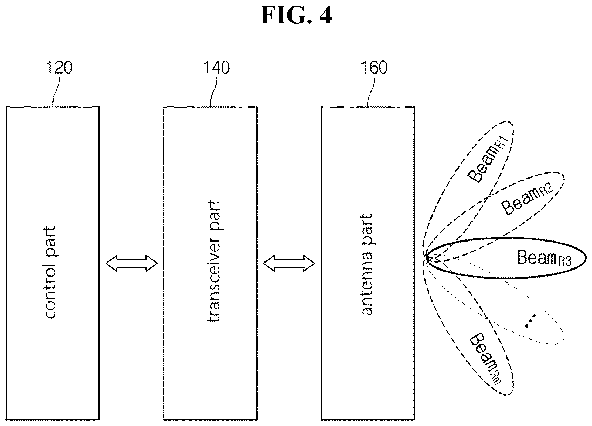

Fig. 3 is a schematic diagram showing the communication environment of the reference communication device 100 and the target communication device 200 using directional beams. Fig. 4 is a block diagram of the reference communication device 100 according to one embodiment.

The embodiment considers a wireless communication environment where the reference communication device 100 that can generate a plurality of directional beams transmits (receives) information or signals to (from) the target communication device 200 using directional beams as shown in fig. 3. At this time, the target communication device 200 can use a plurality of directional beams or a single beam. The reference communication device 100 can be configured as shown in fig. 4 with the antenna part 160 that includes a beam generation circuit capable of generating a plurality of directional beams, and the transceiver part 140 that supplies signals to or receives signals from the antenna part 160 consisting of at least one transceiver unit (TXRU), and the control part 120 that controls system's operation including directional beam generation of the antenna part 160, signal transmission/reception of the transceiver part 140, and TXRU (transceiver unit) allocation, and so on.

*** Antenna Part 160 ***

The antenna part 160 of the reference communication device 100 can be configured with at least one antenna set for generating a plurality of directional beams. Each of the at least one antenna set can select either a array antenna structure consisting of at least 2 antenna elements, or a parasitic array structure consisting of one active element and at least 2 parasitic elements. Different antenna sets can include at least one mutually exclusive antenna element, or can be configured with different parasitic array antennas.

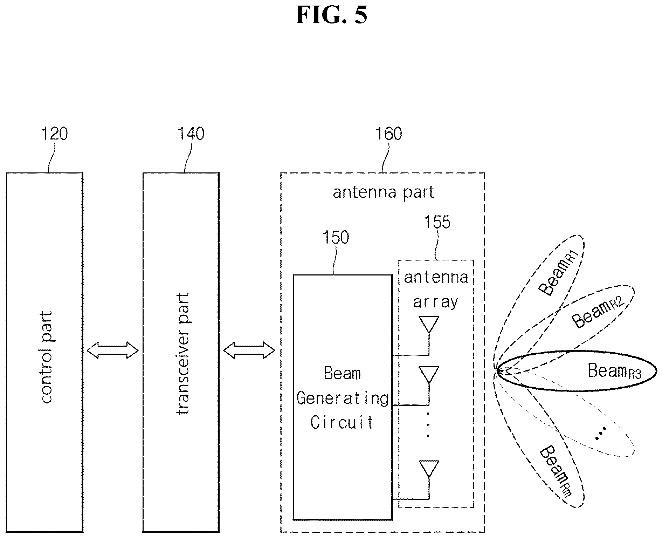

Fig. 5 is a block diagram of the reference communication device 100 according to another embodiment. Figure 6(a) shows an example of array antenna configuration. Figure 6(b) shows an example of array antenna configuration consisting of a plurality of array antenna sets.

The antenna part 160 of the reference communication device 100 can be configured with at least one antenna set and the beam generation circuit 150 as shown in fig. 5. The antenna set can be referred to as the antenna array 155. The antenna part 160 configured with at least one antenna set can use an array antenna structure where each antenna set includes at least 2 antenna elements or a parasitic array structure where each antenna set includes at least 2 parasitic elements, to generate a plurality of directional beams. As one example, for the array antenna structure, as shown in fig. 6(a) and fig. 6(b), it can be configured using one array antenna set or simultaneously using a plurality of array antenna sets. In this case, the beam generation circuit 150 can be configured with a phase shifter array (PSA) consisting of a plurality of phase shifters connected to each antenna element of each array antenna set for adjusting gain and/or phase of each antenna element, and a gain controller to adjust the gain of a signal supplied to (received from) the corresponding antenna set connected to the gain controller. The phase shifter array (PSA can be provided one or more, and operated variably depending on the number of directional beams generated through the antenna part 160, the method of generating directional beams, etc. The gain controller can also be provided one or more, and operated variably, of course.

Fig. 7 is a block diagram of the reference communication device 100 using a parasitic array structure.

A parasitic array structure can use a Switched Parasitic Antenna (SPA) and Electronically Steerable Passive Array Radiator (ESPAR) consisting of one active element and a plurality of parasitic elements (or passive elements) surrounding the active element. In this case, the beam generation circuit 150 can include a beamforming circuit that adjusts the impedance of each parasitic element or controls the short-circuiting or open-circuiting of each parasitic element to form a plurality of beam spaces, and a gain controller for adjusting the gain of signals supplied to or received from the active element. SPA (or ESPAR) can form a plurality of beam spaces using a single parasitic array antenna or adjust the beam pattern by changing the beam space itself. Here, the beam pattern can be determined by controlling the shape of the beam space, the beamwidth of the beam space, the direction of the beam space, the number of beam spaces formed simultaneously, etc. Therefore, in this specification, a plurality of directional beam spaces can be formed by using at least one SPA (or ESPAR) as shown in fig. 7.

*** Directional Beam Generation of Antenna Set ***

The antenna part 160 can generate a plurality of directional beams. One antenna set of the antenna part 160 can generate a plurality of directional beams. At least one antenna set of the antenna part 160 can generate a plurality of directional beams. At least two antenna sets of the antenna part 160 can generate at least one directional beam each. At least two antenna sets of the antenna part 160 can generate at least one different directional beam each. At least two antenna sets of the antenna part 160 can generate the same at least one directional beam.

*** TXRU Allocation to Antenna Set ***

At least one antenna set can be assigned to one transceiver unit (TXRU). At least two antenna sets can be assigned to one transceiver unit (TXRU). One transceiver unit (TXRU) can be assigned to each antenna set. Additionally, at least one transceiver unit (TXRU) can be assigned to one antenna set, or at least two transceiver units (TXRU) can be assigned to one antenna set.

*** Phase Shifter Array (PSA) TXRU Allocation ***

At least one phase shifter array (PSA) can be assigned to one transceiver unit (TXRU). At least two phase shifter arrays (PSAs) can be assigned to one transceiver unit (TXRU). One transceiver unit (TXRU) can be assigned to each phase shifter array (PSA).

*** Antenna Set Data Transmission and Reception ***

At least one antenna set of the antenna part 160 can transmit or receive at least one piece of information or signal. At least two antenna sets of the antenna part 160 can transmit or receive at least one piece of information or signal. At least one antenna set of the antenna part 160 can transmit or receive the same at least one piece of information or signal. Both at least two antenna sets of the antenna part 160 can transmit or receive the same at least one piece of information or signal. Each antenna set of the antenna part 160 can transmit or receive at least one independent piece of information or signal. Additionally, one antenna set can transmit or receive at least one independent piece of information or signal, or one antenna set can transmit or receive at least two independent pieces of information or signal.

Fig. 8 shows the configuration of a bridging beam-switching apparatus according to one embodiment. Fig. 9 shows the configuration of a bridging beam-switching apparatus according to another embodiment.

Referring to fig. 8, in the antenna part 160 of the bridging beam-switching apparatus, one antenna set is formed, and one phase shifter array (PSA) is connected to the one antenna set, allowing individual phase adjustment of each antenna element constituting the antenna set according to the control operation of the control part 120, and then it can be seen that different first directional beam ($\varphi$1) or second directional beam ($\varphi$2) can be generated by setting the phases and/or gains of the phase shifter array's phase shifters connected to the antenna set differently for each directional beam, based on the direction and/or beamwidth of the directional beam to be generated by the control operation of the control part 120. At this time, the control operation of the control part 120 to generate the first directional beam ($\varphi$1) sets the phases and/or gains of the phase shifter array's phase shifters so that the directional beam ($\varphi$) generated through the phase shifter array (PSA) becomes the first directional beam ($\varphi$1) (i.e., $\varphi=\varphi$ 1). Similarly, the control operation of the control part 120 to generate the second directional beam ($\varphi$2) sets the phases and/or gains of the phase shifter array's phase shifters so that the directional beam ($\varphi$) generated through the phase shifter array (PSA) becomes the second directional beam ($\varphi$2) (i.e., $\varphi=\varphi$2). Also, one transceiver unit (TXRU) of the transceiver part 140 that operates according to the control operation of the control part 120 is exemplified, and the phase shifter array (PSA) is connected to this TXRU through a gain controller. In this way, the antenna part 160 can generate a plurality of directional beams. Also, in this way, the antenna part 160 can generate a plurality of directional beams using one antenna set by setting the phases and/or gains of each phase shifter of the phase shifter array differently for each directional beam according to the control operation of the control part 120. Also, in this way, at least one antenna set of the antenna unit (160) can generate a plurality of directional beams..

In another embodiment, referring to fig. 8, the number of antenna elements constituting the antenna set or the number of phase shifters constituting the phase shifter array (PSA) can be adjusted to control the beamwidth of the directional beam to be generated. At this time, to widen the beamwidth of the directional beam to be generated, the number of antenna elements constituting the antenna set or the number of phase shifters constituting the phase shifter array (PSA) can be reduced, and to narrow the beamwidth, the number of antenna elements or the number of phase shifters constituting the phase shifter array (PSA) to control the beamwidth of the directional beam to be generated can be increased. In another embodiment, referring to fig. 8, the beam pattern of the directional beam to be generated can be controlled by adjusting not only the phase but also the gain of each antenna element constituting the antenna set. Regarding gain adjustment of each antenna element, it goes without saying that the gain of each phase shifter constituting the phase shifter array (PSA) can be adjusted. However, since the method of controlling the direction, beamwidth, and beam pattern of a directional beam to be generated through antenna set is generally well known, detailed descriptions will be omitted in this specification. In this way, the antenna part 160 can generate a plurality of directional beams capable of adjusting the beamwidth and/or beam pattern. Also, in this way, the antenna part 160 can generate a plurality of directional beams using one antenna set by setting the phases and/or gains of each phase shifter of the phase shifter array differently for each directional beam according to the control operation of the control part 120; adjusting the gain of each antenna element constituting the antenna set or the gain of each phase shifter constituting the phase shifter array (PSA); or adjusting the number of antenna elements constituting the antenna set or the number of phase shifters constituting the phase shifter array (PSA). Also, in this way, at least one antenna set of the antenna unit (160) can generate a plurality of directional beams capable of adjusting the beamwidth and/or beam pattern.

In another embodiment, referring to fig. 8, in beam-bridging between the first directional beam ($\varphi$1) and the second directional beam ($\varphi$2), a bridging beam ($\varphi$b) that covers the boundary region between the first directional beam ($\varphi$1) and the second directional beam ($\varphi$2) can be generated by setting the direction of the bridging beam as a value between the direction of the first directional beam ($\varphi$1) and the direction of the second

directional beam ($\varphi$2) and then by adjusting the phase of each phase shifter of phase shifter array (PSA) in accordance with this set direction. Also, the gain of each antenna element constituting the antenna set or the gain of each phase shifter constituting the phase shifter array (PSA) can be adjusted; or the number of antenna elements constituting the antenna set or the number of phase shifters constituting the phase shifter array (PSA) can be adjusted to generate a bridging beam capable of adjusting the beamwidth and/or beam pattern..

Referring to fig. 9, one antenna set is formed in the antenna part 160 of the bridging beam-switching apparatus, and two phase shifter arrays (PSAs) are connected to the antenna set. Based on the direction and/or beamwidth of the directional beam to be generated according to the control operation of the control part 120, phases and/or gains for each of the two phase shifter arrays connected to the antenna set are set differently for each phase shifter array (PSA), and then one of the two phase shifter arrays is selected through switches to generate different first directional beam $\varphi$1 or second directional beam $\varphi$2.

At this time, for generating the first directional beam $\varphi$1, the operation of the control part 120 sets the phase and/or gain of each phase shifter of the first phase shifter array (PSA1) to generate the first directional beam $\varphi$1 through the first phase shifter array (PSA1), and connects SW1 and disconnects SW2.

Similarly, for generating the second directional beam $\varphi$2, the operation of the control part 120 sets the phase and/or gain of each phase shifter of the second phase shifter array (PSA2) to generate the second directional beam $\varphi$2 through the second phase shifter array (PSA2), and connects SW2 and disconnects SW1. Additionally, one transceiver unit (TXRU) of the transceiver part 140 operating according to the control operation of the control part 120 is exemplified, and one of the first phase shifter array (PSA1) set to generate the first directional beam and the second phase shifter array (PSA2) set to generate the second directional beam is selected through switches, and the selected one is connected to the transceiver unit (TXRU) through a gain controller.

In this way, the antenna part 160 can generate a plurality of directional beams. Also, in this way, the antenna part 160 can generate a plurality of different directional beams using one antenna set, according to the control operation of the control part 120, by selecting one among a plurality of phase shifter arrays configured to generate a plurality of different directional beams, connected to the antenna set , and then by connecting the corresponding switch to connect the selected phase shifter array to the transceiver unit (TXRU) through a gain controller and disconnecting the remaining switches.

Also, in this way, at least one antenna set of the antenna part 160 can generate a plurality of directional beams. In another embodiment, according to the control operation of the control part 120, by simultaneously connecting SW1 and SW2 and simultaneously using the first phase shifter array (PSA1) set to generate the first directional beam $\varphi$1 and the second phase shifter array (PSA2) set to generate the second directional beam $\varphi$2, it is possible to operate so as to simultaneously generate two different directional beams. In this way, one antenna set can simultaneously generate a plurality of different directional beams. Also, in this way, at least one antenna set can simultaneously generate a plurality of different directional beams.

In another embodiment, referring to fig. 9, by adjusting the number of antenna elements constituting the antenna set or the number of phase shifters constituting each phase shifter array (PSA), the beamwidth of each directional beam to be generated can be controlled. At this time, to widen the beamwidth of each directional beam to be generated, the number of antenna elements constituting the antenna set or the number of phase shifters constituting each phase shifter array (PSA) can be reduced, and to narrow the beamwidth, the number of antenna elements or the number of phase shifters constituting each phase shifter array (PSA) can be increased, thus controlling the beamwidth of each directional beam to be generated.

In another embodiment, referring to fig. 9, by adjusting not only the phase of each antenna element constituting the antenna set but also the gain of each antenna element, the beam pattern of the directional beam to be generated can be controlled. Wherein adjusting the gain of each antenna element, the gain of each phase shifter constituting each phase shifter array (PSA) can also be adjusted.

However, since the method of controlling the direction, beamwidth, and beam pattern of the directional beam to be generated through the antenna set is generally well known, detailed descriptions will be omitted in this specification. In this way, the antenna part 160 can generate a plurality of directional beams capable of adjusting the beamwidth and/or beam pattern.

Also in this way, the antenna part 160, according to the control operation of the control part 120, can generate a plurality of directional beams capable of adjusting the beamwidth and/or beam pattern. using one antenna set by either: selecting one among a plurality of phase shifter arrays set to generate a plurality of different directional beams, connected to the antenna set; adjusting the gain of each antenna element constituting the antenna set or the gain of each phase shifter constituting each phase shifter array (PSA); or adjusting the number of antenna elements constituting the antenna set or the number of phase shifters constituting each phase shifter array (PSA).

In another embodiment, referring to fig. 9, according to the control operation of the control part 120, by simultaneously connecting SW1 and SW2 and simultaneously using the first phase shifter array (PSA1) set to generate the first directional beam $\varphi$1 and the second

phase shifter array (PSA2) set to generate the second directional beam φ2, it is possible to operate so as to simultaneously generate two different directional beams capable of adjusting the beamwidth and/or beam pattern.

In this way, one antenna set can simultaneously generate a plurality of different directional beams capable of adjusting the beamwidth and/or beam pattern. Also, in this way, at least one antenna set can simultaneously generate a plurality of different directional beams capable of adjusting the beamwidth and/or beam pattern.

In another embodiment, referring to fig. 9, for beam-bridging between the first directional beam φ1 generated by the first phase shifter array (PSA1) and the second directional beam φ2 generated by the second phase shifter array (PSA2), either by additionally using a third phase shifter array different from the first phase shifter array (PSA1) and the second phase shifter array (PSA2) that generate the first directional beam φ1 and the second directional beam φ2, respectively; or by using one of the first phase shifter array (PSA1) and the second phase shifter array (PSA2), setting the direction of the directional beam to be generated through the used phase shifter array to a value between the direction of the first directional beam φ1 and the direction of the second directional beam φ2, and then adjusting the phases and/or gains of each of phase shifters of the used phase shifter array (PSA), a bridging beam φb covering the boundary region between the first directional beam φ1 and second directional beam φ2 can be generated.

Additionally, the bridging beam with adjustable beamwidth and/or beam pattern can be generated by either: adjusting the gain of each antenna element constituting the antenna set or the gain of each phase shifter constituting the phase shifter array (PSA); or adjusting the number of antenna elements constituting the antenna set or the number of phase shifters constituting the phase shifter array (PSA).

Besides these, various beam generation structures can be formed by: increasing the number of antenna sets constituting the antenna part 160; increasing the number of phase shifter arrays (PSAs) connected to each antenna set; increasing the number of transceiver units (TXRUs); or according to methods of allocating and connecting antenna sets or phase shifter arrays (PSAs) to transceiver units (TXRUs).

*** Beam-switching Beam Set ***

In a communication system equipped with a beam codebook and using directional beams, beam-switching between directional beams due to movement of at least one of the reference communication device 100 and other devices is an essential operation. At this time, beam-switching generally refers to an operation of switching a serving beam from the pre-switching directional beam which is a directional beam currently in use to the target directional beam for beam-switching, which is a directional beam selected as the target for beam-switching. Therefore, beam-switching occurs between the pre-switching directional beam and the target directional beam for beam-switching.

In this specification, we define a beam-switching beam set participating in beam-switching, which consists of the pre-switching directional beam and the target directional beam for beam-switching. At this time, an entity of the beam-switching beam set can be a component of a beam codebook, that can be generated through the antenna part 160. Here, while each of the pre-switching directional beam and the target directional beam for beam-switching composing the beam-switching beam set are typically one directional beam, it is also possible that the pre-switching directional beam can include at least 2 directional beams or the target directional beam for beam-switching can include at least 2 directional beams. At this time, beam-switching can be either from at least 2 pre-switching directional beams to at least one target directional beam for beam-switching, or from at least one pre-switching directional beam to at least 2 target directional beams for beam-switching.

Fig. 10 shows an example of directional communication between the reference communication device 100 and another device. Fig. 11 shows a beam-switching communication environment and an example of beam-switching beam set configuration. Fig. 12 shows an example of ping-pong beam-switching and an associated example of beam-switching beam set configuration. Fig. 13 shows another example of beam-switching beam set configuration.

In one embodiment, referring to fig. 10, the reference communication device 100 communicates with the target communication device 200, which is another device, using the first directional beam as the serving beam. At this time, according to movement of at least one of the reference communication device 100 and another device, the target communication device 200 and as shown in Figure 11, if the serving beam of the reference communication device 100 must be switched from the first directional beam (the pre-switching directional beam) to the second directional beam (the target directional beam for beam-switching), a beam-switching beam set can consist of the first directional beam and second directional beam participating in beam-switching.

At this time, when the beam-switching beam set consists of only two entities (one pre-switching directional beam and one target directional beam for beam-switching), one of the beam-switching beam set entities can be designated as the first entity and the other as the second entity. Here, the pre-switching directional beam can be designated as the first entity and the target directional beam for beam-switching as the second entity, or the target directional beam for beam-switching can be designated as the first entity and the pre-switching directional beam as the second entity, or one of the two entities can be randomly designated as the first entity and the other as the second entity.

In one embodiment, referring to figs. 11 and 12, when constituting a beam-switching beam set with the first directional beam and second directional beam participating in beam-switching, and when switching from the first directional beam to the second directional beam, either the first directional beam can be designated as the first entity and the second directional beam as the second entity, or conversely, the second directional beam can be designated as the first entity and the first directional beam as the second entity.

When switching from the second directional beam to the first directional beam, either the second directional beam can be designated as the first entity and the first directional beam as the second entity, or conversely, the first directional beam can be designated as the first entity and the second directional beam as the second entity.

Additionally, regardless of switching direction, the first directional beam and the second directional beam can be randomly designated as the first entity and the second entity.

Also, the pre-switching directional beam can be either preset for directional communication among the beam-switching beam set entities or can be the serving beam currently in use for directional communication.

In a communication system using directional beams, it is common to designate the serving beam currently in use as the pre-switching directional beam. However, when the serving beam currently in use does not perform directional communication, a separately preset directional beam can be designated as the pre-switching directional beam.

The target directional beam for beam-switching is a directional beam selected as the target for beam-switching from the pre-switching directional beam among the entities of the beam-switching beam set for directional communication. In a communication system using directional beams, the target directional beam for beam-switching can be a directional beam in a beam codebook corresponding to a direction immediately adjacent to the pre-switching directional beam, which is the serving beam currently in use. However, a directional beam in a beam codebook corresponding to a direction not immediately adjacent to the pre-switching directional beam, which is the serving beam currently in use can also be selected or designated as the target directional beam for beam-switching.

In one embodiment, referring to fig. 13, the beam codebook can be designed with the first directional beam and the second directional beam of an identical beamwidth, and the third directional beam of a relatively narrow beamwidth positioned between the first directional beam and the second directional beam. In this case, when needed, a beam-switching beam set can be constructed with directional beams corresponding to directions non-adjacent to each other in the beam codebook (the first directional beam and the second directional beam in fig. 13).

\*\*\* Beam-switching Request Event \*\*\*

Beam-switching between beam-switching beam set entities is an operation that takes place according to occurrence of a beam-switching request event between beam-switching beam set entities. At this time, the beam-switching request event can be classified into a simple beam-switching request event and a ping-pong beam-switching request event.

A simple beam-switching request event is an event where, due to movement of at least one of the reference communication device 100 and another device, mutual beam-switching requests between the pre-switching directional beam which is the serving beam currently in use and the target directional beam for beam-switching occur less than a preset count of mutual beam-switching requests within a preset time.

In one embodiment, referring to fig. 11, when the preset count of mutual beam-switching requests is 2, and if the first directional beam is the serving beam currently in use, and the second directional beam should be designated as a new serving beam, due to movement of at least one of the reference communication device 100 and another device, in other words, if beam-switching should be performed from the first directional beam which is the serving beam currently in use to the second directional beam, a beam-switching request event occurs from the first directional beam to the second directional beam.

At this time, since the beam-switching request event between the beam-switching beam set entities occurs only once within the preset time, this beam-switching request event is classified as a simple beam-switching request event.

Furthermore, regardless of switching direction, in other words, whether switching from the first directional beam to the second directional beam or switching from the second directional beam to the first directional beam, if mutual beam-switching requests between the beam-switching beam set entities occur less than the preset count of mutual beam-switching requests within the preset time, such beam-switching request events can also be classified as simple beam-switching request events.

In this way, a simple beam-switching request event can be seen as an event where mutual beam-switching requests between the pre-switching directional beam and the target directional beam for beam-switching, which are the beam-switching beam set entities participating in beam-switching, occur less than the preset count of mutual beam-switching requests within the preset time.

A ping-pong beam-switching request event is an event in which mutual beam-switching requests between the beam-switching beam set entities of a preset count at least two occur without beam-switching to a directional beam not included in the beam-switching beam set, within a preset time, or an event in which alternating beam-switching requests between the beam-switching beam set entities of a preset count of at least one occur without beam-switching to a directional beam not included in the beam-switching beam set, within a preset time.

At this time, the count of alternating beam-switching requests between beam-switching beam set entities can be set to one less than the count of mutual beam-switching requests that occur between the beam-switching beam set entities, regardless of switching direction, without beam-switching to a directional beam not included in the beam-switching beam set within a preset time.

As one embodiment referring to fig. 12, if the preset count of mutual beam-switching requests for occurrence of the ping-pong beam-switching request event is 3; a beam-switching beam set consists of a first directional beam and a second directional beam; and within the preset time, without beam-switching to a directional beam not included in the beam-switching beam set, beam-switching requests occur between the beam-switching beam set entities only: beam-switching from the first directional beam to the second directional beam, then again from the second directional beam to the first directional beam, and then again from the first directional beam to the second directional beam, this event is classified as a ping-pong beam-switching request event with the preset count of mutual beam-switching requests being 3.

The preset count of mutual beam-switching requests, which is the criterion for occurrence of the ping-pong beam-switching request event can be set to any value of 2 or more according to operational requirements in a communication system.

The preset count of alternating beam-switching requests, which is the criterion for occurrence of the ping-pong beam-switching request event is defined as a value reduced by 1 from the count of mutual beam-switching requests occurring only between the beam-switching set entities, regardless of switching direction, without beam-switching to a directional beam not included in the beam-switching beam set within a preset time.

An alternating beam-switching request occurs when at least two mutual beam-switching requests occur between the beam-switching beam set entities.

As one embodiment referring to fig. 12, if beam-switching from the first directional beam of the beam-switching beam set to the second directional beam occurs, and then again a beam-switching request from the second directional beam to the first directional beam occurs, the count of mutual beam-switching requests between the beam-switching beam set entities is 2, but the count of alternating beam-switching requests is 1. Therefore, the count of alternating beam-switching requests becomes a value reduced by 1 from the count of mutual beam-switching requests between the beam-switching beam set entities.

As one embodiment, referring to fig. 12, if a first directional beam and a second directional beam constitute a beam-switching beam set, and within a preset time, without beam-switching to a directional beam not included in the beam-switching beam set, at least two mutual inter-entity beam-switchings or beam-switching requests occur between the first directional beam and the second directional beam, which are the beam-switching beam set entities, this event can be classified as a ping-pong beam-switching request event.

*** Bridging beams ***

Fig. 14 illustrates an example of bridging beam generation according to one embodiment. Fig. 15 shows another example of bridging beam generation according to another embodiment. Fig. 16 shows an example of bridging beam generation according to yet another embodiment.

A bridging beam is a directional beam that covers the boundary area between the beam-switching beam set entities. The bridging beam is a directional beam whose direction and beamwidth are set to cover the boundary region (or edge) between the beam-switching beam set entities, thereby eliminating the beam-edge effects and/or occurrence of ping-pong beam-switching request events.

In one embodiment, referring to figs. 14 to 16, the first directional beam is designated as the first entity of the beam-switching beam set, and the second directional beam is designated as the second entity of the beam-switching beam set. In this case, a directional beam that has a direction positioned between the direction of the first directional beam and the direction of the second directional beam (i.e., between the direction of the first entity of the beam-switching beam set and the direction of the second entity of the beam-switching beam set) and covers the boundary region between the first directional beam (the first entity) and the second directional beam (the second entity) of the beam-switching beam set is defined as a bridging beam.

The direction positioned between the direction of the first entity of the beam-switching beam set and the direction of the second entity of the beam-switching beam set may include a boundary direction between the first entity and the second entity of the beam-switching beam set, an intermediate direction between the direction of the first entity of the beam-switching beam set and the direction of the second entity of the beam-switching beam set, a direction closer to either the direction of the first entity of the beam-switching beam set or the direction of the second entity of the beam-switching beam set, or a direction between the direction of the first entity of the beam-switching beam set and the direction of the second entity of the beam-switching beam set, as determined according to a predefined rule.

The boundary direction between the first entity and the second entity of the beam-switching beam set can be defined in various ways. In one embodiment, the boundary direction between the first entity and the second entity of the beam-switching beam set can be set to a direction corresponding to directional angle where a directional gain of the first entity of the beam-switching beam set and a directional gain of the second entity become identical.

In another embodiment, the boundary direction between the first entity and the second entity of the beam-switching beam set can be a direction corresponding to the boundary of the first entity of the beam-switching beam set or a direction corresponding to the boundary of the second entity of the beam-switching beam set. Alternatively, the boundary direction between the first entity and the second entity of the beam-switching beam set can be a direction corresponding to the boundary of the pre-switching directional beam or a direction corresponding to the boundary of the target directional beam for beam-switching.

A direction closer to either the direction of the first entity of the beam-switching beam set or the direction of the second entity of the beam-switching beam set can be set to a direction closer to the direction of the first entity of the beam-switching beam set or a direction closer to the direction of the second entity of the beam-switching beam set.

Additionally, it may be set to a direction closer to either the direction of the pre-switching directional beam or the direction of the target directional beam for beam-switching. In one embodiment, a direction closer to either the direction of the first entity of the beam-switching beam set or the direction of the second entity of the beam-switching beam set can be set along the central axis direction of the movement range or relative movement range, based on the movement range or relative movement range of the reference communication device 100 and another device over a predetermined period.

When determining the direction between the direction of the first entity of the beam-switching beam set and the direction of the second entity of the beam-switching beam set according to a predefined rule, various factors such as the direction and beamwidth of the first entity, the direction and beamwidth of the second entity, the movement range or relative movement range of the reference communication device 100 and another device can be considered to establish the predefined rule. The direction and beamwidth of the bridging beam can then be set according to this rule.

In one embodiment, when the reference communication device 100 is fixed and the other device is moving, the direction and beamwidth of the bridging beam can be set to cover the movement range of the other device over a predetermined period, based on the central axis direction of the movement range and the angular range of the movement range, according to a predefined rule.

The beamwidth of the bridging beam must be set to sufficiently cover the boundary region between the beam-switching beam set entities. Therefore, it is necessary to consider both the direction and beamwidth of the bridging beam when setting its beamwidth to cover the boundary region between the beam-switching beam set entities.

Additionally, the beamwidth of the bridging beam can be set to be the same as or different from one of the beamwidth of the first entity of the beam-switching beam set and the beamwidth of the second entity of the beam-switching beam set. In other words, the beamwidth of the bridging beam can be set equal to one of the beamwidth of the first entity of the beam-switching beam set and the beamwidth of the second entity of the beam-switching beam set, or set to a value between the beamwidth of the first entity of the beam-switching beam set and the beamwidth of the second entity of the beam-switching beam set, or set to a value larger than the larger value of the beamwidth of the first entity of the beam-switching beam set and the beamwidth of the second entity of the beam-switching beam set,, or set to a value smaller than the smaller value of the beamwidth of the first entity of the beam-switching beam set and the beamwidth of the second entity of the beam-switching beam set.

In one embodiment, the beamwidth of the bridging beam can be set to the same value as the beamwidth of the pre-switching directional beam or the beamwidth of the target directional beam for beam-switching.

Conversely, the beamwidth of the bridging beam can be set to a value different from both the beamwidth of the pre-switching directional beam and the beamwidth of the target directional beam for beam-switching.

In one embodiment, referring to fig. 14, when the beamwidth of the first entity of the beam-switching beam set and the beamwidth of the second entity of the beam-switching beam set are the same, the beamwidth of the bridging beam can be set to have the same beamwidth as the beamwidth of the first directional beam (the first entity of the beam-switching beam set) or the beamwidth of the second directional beam (the second entity of the beam-switching beam set).

As such, the beamwidth of the bridging beam can be set equal to one of the beamwidth of the first entity of the beam-switching beam set and the beamwidth of the second entity of the beam-switching beam set.

In another embodiment, referring to fig. 15, the beamwidth of the first directional beam (the first entity of the beam-switching beam set) and the beamwidth of the second directional beam (the second entity of the beam-switching beam set) are identical. The beamwidth of the bridging beam can be set to a beam region that covers both the beam regions of the first entity and the second entity of the beam-switching beam set (i.e., the angular range resulting from the sum of the beamwidth of the first entity of the beam-switching beam set and the beamwidth of the second entity of the beam-switching beam set).

In this way, the beamwidth of the bridging beam can be set to a value larger than the larger value of the beamwidth of the first entity of the beam-switching beam set and the beamwidth of the second entity of the beam-switching beam set.

Additionally, the beamwidth of the bridging beam can be set to a value smaller than the smaller value of the beamwidth of the first entity of the beam-switching beam set and the beamwidth of the second entity of the beam-switching beam set, or to a value between the beamwidth of the first entity of the beam-switching beam set and the beamwidth of the second entity of the beam-switching beam set.

In one embodiment, referring to fig. 16, when the beamwidth of the first directional beam (the first entity of the beam-switching beam set) and the beamwidth of the second directional beam (the second entity of the beam-switching beam set) are the same, the beamwidth of the bridging beam can be set to a value smaller than the beamwidth of the first directional beam and the beamwidth of the second directional beam. In this way, the beamwidth of the bridging beam can be set to a value smaller than the smaller value of the beamwidth of the first entity of the beam-switching beam set and the beamwidth of the second entity of the beam-switching beam set.

The direction or beamwidth of the bridging beam can be set based on at least one of the number of ping-pong beam-switching requests per unit time, a movement speed (including a velocity), a relative movement speed (including a relative velocity), a distance between communication devices, a range of directional angle due to movement over a predetermined period, and a relative range of directional angle due to movement over a predetermined period.

In one embodiment, as the number of ping-pong beam-switching requests per unit time increases, the beamwidth of the bridging beam can be widened, and as the number of ping-pong beam-switching requests per unit time decreases, the beamwidth of the bridging beam can be narrowed, thereby controlling the beamwidth of the bridging beam.

In one embodiment, as the magnitude of the movement speed (or the magnitude of the velocity) or the magnitude of the relative movement speed (or the magnitude of the relative velocity) increases, the beamwidth of the bridging beam can be widened, and as the magnitude of the movement speed (or the magnitude of the velocity) or the relative movement speed (or the magnitude of the relative velocity) decreases, the beamwidth of the bridging beam can be narrowed, thereby controlling the beamwidth of the bridging beam.

Additionally, not only the magnitude of the movement speed or the relative movement speed but also the direction of the movement speed or the relative movement speed can be considered to set the direction and beamwidth of the bridging beam.

In one embodiment, as the distance between communication devices increases, the beamwidth of the bridging beam can be narrowed, and as the distance between communication devices decreases, the beamwidth of the bridging beam can be widened, thereby controlling the beamwidth of the bridging beam.

Furthermore, the direction and beamwidth of the bridging beam can be set simultaneously or individually to cover the movement range or relative movement range, or to cover part of the movement range or relative movement range, based on the directional angular range of the movement range or the directional angular range of the relative movement range over a predetermined period.

Referring to fig. 9, one antenna set is formed in the antenna part 160 of the bridging beam-switching apparatus, and two phase shifter arrays (PSAs) are connected to the antenna set. Based on the direction and/or beamwidth of the directional beam to be generated according to the control operation of the control part 120, phases and/or gains for each of the two phase shifter arrays connected to the antenna set are set differently for each phase shifter array (PSA), and then one of the two phase shifter arrays is selected through switches to generate different first directional beam $\varphi1$ or second directional beam $\varphi2$.

At this time, for generating the first directional beam $\varphi1$, the operation of the control part 120 sets the phase and/or gain of each phase shifter of the first phase shifter array (PSA1) to generate the first directional beam $\varphi1$ through the first phase shifter array (PSA1), and connects SW1 and disconnects SW2. Similarly, for generating the second directional beam $\varphi2$, the operation of the control part 120 sets the phase and/or gain of each phase shifter of the second phase shifter array (PSA2) to generate the second directional beam $\varphi2$ through the second phase shifter array (PSA2), and connects SW2 and disconnects SW1.

Additionally, one transceiver unit (TXRU) of the transceiver part 140 operating according to the control operation of the control part 120 is exemplified, and one of the first phase shifter array (PSA1) set to generate the first directional beam and the second phase shifter array (PSA2) set to generate the second directional beam is selected through switches, and the selected one is connected to the transceiver unit (TXRU) through a gain controller.

In this way, the antenna part 160 can generate a plurality of directional beams. Also, in this way, the antenna part 160 can generate a plurality of different directional beams using one antenna set, according to the control operation of the control part 120, by selecting one among a plurality of phase shifter arrays configured to generate a plurality of different directional beams, connected to the antenna set , and then by connecting the corresponding switch to connect the selected phase shifter array to the transceiver unit (TXRU) through a gain controller and disconnecting the remaining switches.

Also, in this way, at least one antenna set of the antenna part 160 can generate a plurality of directional beams. In another embodiment, according to the control operation of the control part 120, by simultaneously connecting SW1 and SW2 and simultaneously using the first phase shifter array (PSA1) set to generate the first directional beam φ1 and the second phase shifter array (PSA2) set to generate the second directional beam φ2, it is possible to operate so as to simultaneously generate two different directional beams.

In this way, one antenna set can simultaneously generate a plurality of different directional beams. Also, in this way, at least one antenna set can simultaneously generate a plurality of different directional beams.

In another embodiment, referring to fig. 9, by adjusting the number of antenna elements constituting the antenna set or the number of phase shifters constituting each phase shifter array (PSA), the beamwidth of each directional beam to be generated can be controlled.

At this time, to widen the beamwidth of each directional beam to be generated, the number of antenna elements constituting the antenna set or the number of phase shifters constituting each phase shifter array (PSA) can be reduced, and to narrow the beamwidth, the number of antenna elements or the number of phase shifters constituting each phase shifter array (PSA) can be increased, thus controlling the beamwidth of each directional beam to be generated.

In another embodiment, referring to fig. 9, by adjusting not only the phase of each antenna element constituting the antenna set but also the gain of each antenna element, the beam pattern of the directional beam to be generated can be controlled. Wherein adjusting the gain of each antenna element, the gain of each phase shifter constituting each phase shifter array (PSA) can also be adjusted.

However, since the method of controlling the direction, beamwidth, and beam pattern of the directional beam to be generated through the antenna set is generally well known, detailed descriptions will be omitted in this specification.

In this way, the antenna part 160 can generate a plurality of directional beams capable of adjusting the beamwidth and/or beam pattern.

Also in this way, the antenna part 160, according to the control operation of the control part 120, can generate a plurality of directional beams capable of adjusting the beamwidth and/or beam pattern using one antenna set by either: selecting one among a plurality of phase shifter arrays set to generate a plurality of different directional beams, connected to the antenna set; adjusting the gain of each antenna element constituting the antenna set or the gain of each phase shifter constituting each phase shifter array (PSA); or adjusting the number of antenna elements constituting the antenna set or the number of phase shifters constituting each phase shifter array (PSA).

Additionally, at least one antenna set in the antenna part 160 can generate a plurality of directional beams capable of adjusting the beamwidth and/or beam pattern.

In another embodiment, referring to fig. 9, according to the control operation of the control part 120, by simultaneously connecting SW1 and SW2 and simultaneously using the first phase shifter array (PSA1) set to generate the first directional beam φ1 and the second phase shifter array (PSA2) set to generate the second directional beam φ2, it is possible to operate so as to simultaneously generate two different directional beams capable of adjusting the beamwidth and/or beam pattern.

In this way, one antenna set can simultaneously generate a plurality of different directional beams capable of adjusting the beamwidth and/or beam pattern. Also, in this way, at least one antenna set can simultaneously generate a plurality of different directional beams capable of adjusting the beamwidth and/or beam pattern.

In another embodiment, referring to fig. 9, for beam-bridging between the first directional beam φ1 generated by the first phase shifter array (PSA1) and the second directional beam φ2 generated by the second phase shifter array (PSA2), either by additionally using a third phase shifter array different from the first phase shifter array (PSA1) and the second phase shifter array (PSA2) that generate the first directional beam φ1 and the second directional beam φ2, respectively; or by using one of the first phase shifter array (PSA1) and the second phase shifter array (PSA2), setting the direction of the directional beam to be generated through the used phase shifter array to a value between the direction of the first directional beam φ1 and the direction of the second directional beam φ2, and then adjusting the phases and/or gains of each of phase shifters of the used phase shifter array (PSA), a bridging beam φb covering the boundary region between the first directional beam φ1 and second directional beam φ2 can be generated.

Additionally, the bridging beam with adjustable beamwidth and/or beam pattern can be generated by either: adjusting the gain of each antenna element constituting the antenna set or the gain of each phase shifter constituting the phase shifter array (PSA); or adjusting the number of antenna elements constituting the antenna set or the number of phase shifters constituting the phase shifter array (PSA).

Besides these, various beam generation structures can be formed by: increasing the number of antenna sets constituting the antenna part 160; increasing the number of phase shifter arrays (PSAs) connected to each antenna set; increasing the number of transceiver units (TXRUs); or according to methods of allocating and connecting antenna sets or phase shifter arrays (PSAs) to transceiver units (TXRUs).

*** Beam-Switching Beam Set ***

In a communication system equipped with a beam codebook and using directional beams, beam-switching between directional beams due to movement of at least one of the reference communication device 100 and other devices is an essential operation. At this time, beam-switching generally refers to an operation of switching a serving beam from the pre-switching directional beam which is a directional beam currently in use to the target directional beam for beam-switching, which is a directional beam selected as the target for beam-switching.

Therefore, beam-switching occurs between the pre-switching directional beam and the target directional beam for beam-switching. In this specification, we define a beam-switching beam set participating in beam-switching, which consists of the pre-switching directional beam and the target directional beam for beam-switching. At this time, an entity of the beam-switching beam set can be a component of a beam codebook, that can be generated through the antenna part 160.

Here, while each of the pre-switching directional beam and the target directional beam for beam-switching composing the beam-switching beam set are typically one directional beam, it is also possible that the pre-switching directional beam can include at least 2 directional beams or the target directional beam for beam-switching can include at least 2 directional beams. At this time, beam-switching can be either from at least 2 pre-switching directional beams to at least one target directional beam for beam-switching, or from at least one pre-switching directional beam to at least 2 target directional beams for beam-switching.

Fig. 10 shows an example of directional communication between the reference communication device 100 and another device. Fig. 11 shows a beam-switching communication environment and an example of beam-switching beam set configuration. Fig. 12 shows an example of ping-pong beam-switching and an associated example of beam-switching beam set configuration. Fig. 13 shows another example of beam-switching beam set configuration.

In one embodiment, referring to fig. 10, the reference communication device 100 communicates with the target communication device 200, which is another device, using the first directional beam as the serving beam.

At this time, according to movement of at least one of the reference communication device 100 and another device, the target communication device 200 and as shown in fig. 11, if the serving beam of the reference communication device 100 must be switched from the first directional beam (the pre-switching directional beam) to the second directional beam (the target directional beam for beam-switching), a beam-switching beam set can consist of the first directional beam and second directional beam participating in beam-switching.

At this time, when the beam-switching beam set consists of only two entities (one pre-switching directional beam and one target directional beam for beam-switching), one of the beam-switching beam set entities can be designated as the first entity and the other as the second entity.

Here, the pre-switching directional beam can be designated as the first entity and the target directional beam for beam-switching as the second entity, or the target directional beam for beam-switching can be designated as the first entity and the pre-switching directional beam as the second entity, or one of the two entities can be randomly designated as the first entity and the other as the second entity.

In one embodiment, referring to figs. 11 and 12, when constituting a beam-switching beam set with the first directional beam and second directional beam participating in beam-switching, and when switching from the first directional beam to the second directional beam, either the first directional beam can be designated as the first entity and the second directional beam as the second entity, or conversely, the second directional beam can be designated as the first entity and the first directional beam as the second entity. When switching from the second directional beam to the first directional beam, either the second directional beam can be designated as the first entity and the first directional beam as the second entity, or conversely, the first directional beam can be designated as the first entity and the second directional beam as the second entity.

Additionally, regardless of switching direction, the first directional beam and the second directional beam can be randomly designated as the first entity and the second entity.

Also, the pre-switching directional beam can be either preset for directional communication among the beam-switching beam set entities or can be the serving beam currently in use for directional communication.

In a communication system using directional beams, it is common to designate the serving beam currently in use as the pre-switching directional beam. However, when the serving beam currently in use does not perform directional communication, a separately preset directional beam can be designated as the pre-switching directional beam.

The target directional beam for beam-switching is a directional beam selected as the target for beam-switching from the pre-switching directional beam among the entities of the beam-switching beam set for directional communication.

In a communication system using directional beams, the target directional beam for beam-switching can be a directional beam in a beam codebook corresponding to a direction immediately adjacent to the pre-switching directional beam, which is the serving beam currently in use. However, a directional beam in a beam codebook corresponding to a direction not immediately adjacent to the pre-switching directional beam, which is the serving beam currently in use can also be selected or designated as the target directional beam for beam-switching.

In one embodiment, referring to fig. 13, the beam codebook can be designed with the first directional beam and the second directional beam of an identical beamwidth, and the third directional beam of a relatively narrow beamwidth positioned between the first directional beam and the second directional beam. In this case, when needed, a beam-switching beam set can be constructed with directional beams corresponding to directions non-adjacent to each other in the beam codebook (the first directional beam and the second directional beam in fig. 13).

*** Beam-switching Request Event ***

Beam-switching between beam-switching beam set entities is an operation that takes place according to occurrence of a beam-switching request event between beam-switching beam set entities. At this time, the beam-switching request event can be classified into a simple beam-switching request event and a ping-pong beam-switching request event.

A simple beam-switching request event is an event where, due to movement of at least one of the reference communication device 100 and another device, mutual beam-switching requests between the pre-switching directional beam which is the serving beam currently in use and the target directional beam for beam-switching occur less than a preset count of mutual beam-switching requests within a preset time.

In one embodiment, referring to fig. 11, when the preset count of mutual beam-switching requests is 2, and if the first directional beam is the serving beam currently in use, and the second directional beam should be designated as a new serving beam, due to movement of at least one of the reference communication device 100 and another device, in other words, if beam-switching should be performed from the first directional beam which is the serving beam currently in use to the second directional beam, a beam-switching request event occurs from the first directional beam to the second directional beam.

At this time, since the beam-switching request event between the beam-switching beam set entities occurs only once within the preset time, this beam-switching request event is classified as a simple beam-switching request event.

Furthermore, regardless of switching direction, in other words, whether switching from the first directional beam to the second directional beam or switching from the second directional beam to the first directional beam, if mutual beam-switching requests between the beam-switching beam set entities occur less than the preset count of mutual beam-switching requests within the preset time, such beam-switching request events can also be classified as simple beam-switching request events.

In this way, a simple beam-switching request event can be seen as an event where mutual beam-switching requests between the pre-switching directional beam and the target directional beam for beam-switching, which are the beam-switching beam set entities participating in beam-switching, occur less than the preset count of mutual beam-switching requests within the preset time.

A ping-pong beam-switching request event is an event in which mutual beam-switching requests between the beam-switching beam set entities of a preset count at least two occur without beam-switching to a directional beam not included in the beam-switching beam set, within a preset time, or an event in which alternating beam-switching requests between the beam-switching beam set entities of a preset count of at least one occur without beam-switching to a directional beam not included in the beam-switching beam set, within a preset time.

At this time, the count of alternating beam-switching requests between beam-switching beam set entities can be set to one less than the count of mutual beam-switching requests that occur between the beam-switching beam set entities, regardless of switching direction, without beam-switching to a directional beam not included in the beam-switching beam set within a preset time.

As one embodiment referring to fig. 12, if the preset count of mutual beam-switching requests for occurrence of the ping-pong beam-switching request event is 3; a beam-switching beam set consists of a first directional beam and a second directional beam; and within the preset time, without beam-switching to a directional beam not included in the beam-switching beam set, beam-switching requests occur between the beam-switching beam set entities only: beam-switching from the first directional beam to the second directional beam, then again from the second directional beam to the first directional beam, and then again from the first directional beam to the second directional beam, this event is classified as a ping-pong beam-switching request event with the preset count of mutual beam-switching requests being 3.

The preset count of mutual beam-switching requests, which is the criterion for occurrence of the ping-pong beam-switching request event can be set to any value of 2 or more according to operational requirements in a communication system.

The preset count of alternating beam-switching requests, which is the criterion for occurrence of the ping-pong beam-switching request event is defined as a value reduced by 1 from the count of mutual beam-switching requests occurring only between the beam-switching set entities, regardless of switching direction, without beam-switching to a directional beam not included in the beam-switching beam set within a preset time. An alternating beam-switching request occurs when at least two mutual beam-switching requests occur between the beam-switching beam set entities.

As one embodiment referring to fig. 12, if beam-switching from the first directional beam of the beam-switching beam set to the second directional beam occurs, and then again a beam-switching request from the second directional beam to the first directional beam occurs, the count of mutual beam-switching requests between the beam-switching beam set entities is 2, but the count of alternating beam-switching requests is 1. Therefore, the count of alternating beam-switching requests becomes a value reduced by 1 from the count of mutual beam-switching requests between the beam-switching beam set entities.

As one embodiment, referring to fig. 12, if a first directional beam and a second directional beam constitute a beam-switching beam set, and within a preset time, without beam-switching to a directional beam not included in the beam-switching beam set, at least two mutual inter-entity beam-switchings or beam-switching requests occur between the first directional beam and the second directional beam, which are the beam-switching beam set entities, this event can be classified as a ping-pong beam-switching request event.

*** Bridging beams ***

Fig. 14 illustrates an example of bridging beam generation according to one embodiment. Fig. 15 shows another example of bridging beam generation according to another embodiment. Fig. 16 shows an example of bridging beam generation according to yet another embodiment.

A bridging beam is a directional beam that covers the boundary area between the beam-switching beam set entities. The bridging beam is a directional beam whose direction and beamwidth are set to cover the boundary region (or edge) between the beam-switching beam set entities, thereby eliminating the beam-edge effects and/or occurrence of ping-pong beam-switching request events.

In one embodiment, referring to figs. 14 to 16, the first directional beam is designated as the first entity of the beam-switching beam set, and the second directional beam is designated as the second entity of the beam-switching beam set. In this case, a directional beam that has a direction positioned between the direction of the first directional beam and the direction of the second directional beam (i.e., between the direction of the first entity of the beam-switching beam set and the direction of the second entity of the beam-switching beam set) and covers the boundary region between the first directional beam (the first entity) and the second directional beam (the second entity) of the beam-switching beam set is defined as a bridging beam.

At this time, the direction positioned between the direction of the first entity of the beam-switching beam set and the direction of the second entity of the beam-switching beam set may include a boundary direction between the first entity and the second entity of the beam-switching beam set, an intermediate direction between the direction of the first entity of the beam-switching beam set and the direction of the second entity of the beam-switching beam set, a direction closer to either the direction of the first entity of the beam-switching beam set or the direction of the second entity of the beam-switching beam set, or a direction between the direction of the first entity of the beam-switching beam set and the direction of the second entity of the beam-switching beam set, as determined according to a predefined rule.

The boundary direction between the first entity and the second entity of the beam-switching beam set can be defined in various ways. In one embodiment, the boundary direction between the first entity and the second entity of the beam-switching beam set can be set to a direction corresponding to directional angle where a directional gain of the first entity of the beam-switching beam set and a directional gain of the second entity become identical.

In another embodiment, the boundary direction between the first entity and the second entity of the beam-switching beam set can be a direction corresponding to the boundary of the first entity of the beam-switching beam set or a direction corresponding to the boundary of the second entity of the beam-switching beam set. Alternatively, the boundary direction between the first entity and the second entity of the beam-switching beam set can be a direction corresponding to the boundary of the pre-switching directional beam or a direction corresponding to the boundary of the target directional beam for beam-switching.

A direction closer to either the direction of the first entity of the beam-switching beam set or the direction of the second entity of the beam-switching beam set can be set to a direction closer to the direction of the first entity of the beam-switching beam set or a direction closer to the direction of the second entity of the beam-switching beam set. Additionally, it may be set to a direction closer to either the direction of the pre-switching directional beam or the direction of the target directional beam for beam-switching.

In one embodiment, a direction closer to either the direction of the first entity of the beam-switching beam set or the direction of the second entity of the beam-switching beam set can be set along the central axis direction of the movement range or relative movement range, based on the movement range or relative movement range of the reference communication device 100 and another device over a predetermined period.

When determining the direction between the direction of the first entity of the beam-switching beam set and the direction of the second entity of the beam-switching beam set according to a predefined rule, various factors such as the direction and beamwidth of the first entity, the direction and beamwidth of the second entity, the movement range or relative movement range of the reference communication device 100 and another device can be considered to establish the predefined rule. The direction and beamwidth of the bridging beam can then be set according to this rule. In one embodiment, when the reference communication device 100 is fixed and the other device is moving, the direction and beamwidth of the bridging beam can be set to cover the movement range of the other device over a predetermined period, based on the central axis direction of the movement range and the angular range of the movement range, according to a predefined rule.

The beamwidth of the bridging beam must be set to sufficiently cover the boundary region between the beam-switching beam set entities. Therefore, it is necessary to consider both the direction and beamwidth of the bridging beam when setting its beamwidth to cover the boundary region between the beam-switching beam set entities.

Additionally, the beamwidth of the bridging beam can be set to be the same as or different from one of the beamwidth of the first entity of the beam-switching beam set and the beamwidth of the second entity of the beam-switching beam set. In other words, the beamwidth of the bridging beam can be set equal to one of the beamwidth of the first entity of the beam-switching beam set and the beamwidth of the second entity of the beam-switching beam set, or set to a value between the beamwidth of the first entity of the beam-switching beam set and the beamwidth of the second entity of the beam-switching beam set, or set to a value larger than the larger value of the beamwidth of the first entity of the beam-switching beam set and the beamwidth of the second entity of the beam-switching beam set,, or set to a value smaller than the smaller value of the beamwidth of the first entity of the beam-switching beam set and the beamwidth of the second entity of the beam-switching beam set.

In one embodiment, the beamwidth of the bridging beam can be set to the same value as the beamwidth of the pre-switching directional beam or the beamwidth of the target directional beam for beam-switching. Conversely, the beamwidth of the bridging beam can be set to a value different from both the beamwidth of the pre-switching directional beam and the beamwidth of the target directional beam for beam-switching.

In one embodiment, referring to fig. 14, when the beamwidth of the first entity of the beam-switching beam set and the beamwidth of the second entity of the beam-switching beam set are the same, the beamwidth of the bridging beam can be set to have the same beamwidth as the beamwidth of the first directional beam (the first entity of the beam-switching beam set) or the beamwidth of the second directional beam (the second entity of the beam-switching beam set). In this way, the beamwidth of the bridging beam can be set equal to one of the beamwidth of the first entity of the beam-switching beam set and the beamwidth of the second entity of the beam-switching beam set.

In another embodiment, referring to fig. 15, the beamwidth of the first directional beam (the first entity of the beam-switching beam set) and the beamwidth of the second directional beam (the second entity of the beam-switching beam set) are identical. The beamwidth of the bridging beam can be set to a beam region that covers both the beam regions of the first entity and the second entity of the beam-switching beam set (i.e., the angular range resulting from the sum of the beamwidth of the first entity of the beam-switching beam set and the beamwidth of the second entity of the beam-switching beam set).

In this way, the beamwidth of the bridging beam can be set to a value larger than the larger value of the beamwidth of the first entity of the beam-switching beam set and the beamwidth of the second entity of the beam-switching beam set. Additionally, the beamwidth of the bridging beam can be set to a value smaller than the smaller value of the beamwidth of the first entity of the beam-switching beam set and the beamwidth of the second entity of the beam-switching beam set, or to a value between the beamwidth of the first entity of the beam-switching beam set and the beamwidth of the second entity of the beam-switching beam set.

In one embodiment, referring to fig. 16, when the beamwidth of the first directional beam (the first entity of the beam-switching beam set) and the beamwidth of the second directional beam (the second entity of the beam-switching beam set) are the same, the beamwidth of the bridging beam can be set to a value smaller than the beamwidth of the first directional beam and the beamwidth of the second directional beam. In this way, the beamwidth of the bridging beam can be set to a value smaller than the smaller value of the beamwidth of the first entity of the beam-switching beam set and the beamwidth of the second entity of the beam-switching beam set.

The direction or beamwidth of the bridging beam can be set based on at least one of the number of ping-pong beam-switching requests per unit time, a movement speed (including a velocity), a relative movement speed (including a relative velocity), a distance between communication devices, a range of directional angle due to movement over a predetermined period, and a relative range of directional angle due to movement over a predetermined period.

In one embodiment, as the number of ping-pong beam-switching requests per unit time increases, the beamwidth of the bridging beam can be widened, and as the number of ping-pong beam-switching requests per unit time decreases, the beamwidth of the bridging beam can be narrowed, thereby controlling the beamwidth of the bridging beam.

In one embodiment, as the magnitude of the movement speed (or the magnitude of the velocity) or the magnitude of the relative movement speed (or the magnitude of the relative velocity) increases, the beamwidth of the bridging beam can be widened, and as the magnitude of the movement speed (or the magnitude of the velocity) or the relative movement speed (or the magnitude of the relative velocity) decreases, the beamwidth of the bridging beam can be narrowed, thereby controlling the beamwidth of the bridging beam.

At this time, not only the magnitude of the movement speed or the relative movement speed but also the direction of the movement speed or the relative movement speed can be considered to set the direction and beamwidth of the bridging beam. In one embodiment, as the distance between communication devices increases, the beamwidth of the bridging beam can be narrowed, and as the distance between communication devices decreases, the beamwidth of the bridging beam can be widened, thereby controlling the beamwidth of the bridging beam. Furthermore, the direction and beamwidth of the bridging beam can be set simultaneously or individually to cover the movement range or relative movement range, or to cover part of the movement range or relative movement range, based on the directional angular range of the movement range or the directional angular range of the relative movement range over a predetermined period.

*** Bridging Beam-switching ***

Figs. 17(a) and 17(b) show examples of bridging beam-switching according to one embodiment.

Bridging beam-switching is serving beam-switching from one entity of the beam-switching beam set to a bridging beam. In other words, it is serving beam-switching from one entity of the beam-switching beam set to the bridging beam that does not belong to the beam-switching beam set. This can be beam-switching from the first entity of the beam-switching beam set to the bridging beam or a beam-switching from the second entity of the beam-switching beam set to the bridging beam. In one embodiment, referring to figs. 17(a) and 17(b), a beam-switching beam set consists of a first directional beam and a second directional beam, and the first directional beam and the second directional beam are designated as the first entity and the second entity of the beam-switching beam set, respectively. At this time, as in fig. 17(a), the bridging beam-switching can be beam-switching from the first directional beam (the first entity of the beam-switching beam set) to the bridging beam, or as in fig. 17(b), beam-switching from the second directional beam (the second entity of the beam-switching beam set) to the bridging beam.

Additionally, after the bridging beam-switching, serving beam-switching occurs from the serving beam currently in use to the bridging beam. In other words, after the bridging beam-switching, instead of the first directional beam or the second directional beam which are components of the beam-switching beam set, the bridging beam is designated as a new serving beam. The bridging beam-switching can be an operation according to a ping-pong beam-switching request event between the beam-switching beam set entities.

*** Bridging Release Beam-switching ***

Figs. 18(a) and 18(b) show examples of bridging release beam-switching according to one embodiment.

Fig. 19 shows another example of bridging release beam-switching according to another embodiment.

During beam-bridging using the bridging beam as a serving beam, a beam-switching can occur from the bridging beam to one of the beam-switching beam set entities according to a beam-switching request event. This beam-switching from the bridging beam to one of the beam-switching beam set entities (i.e., serving beam-switching from the bridging beam to one of the beam-switching beam set entities) is called a bridging release beam-switching.

In other words, when a bridging release beam-switching request event occurs to switch from the bridging beam to the first entity or the second entity of the beam-switching beam set, serving beam-switching can occur from the bridging beam to the first entity or the second entity of the beam-switching beam set. In one embodiment, referring to figs. 18(a) and 18(b), the beam-switching beam set consists of the first directional beam and the second directional beam, and the first directional beam and the second directional beam are designated as the first entity and the second entity of the beam-switching beam set, respectively. At this time, the bridging release beam-switching can be beam-switching from the bridging beam to the first directional beam (the first entity of the beam-switching beam set) as in fig. 18(a), or beam-switching from the bridging beam to the second directional beam (the second entity of the beam-switching beam set) as in fig. 18(b).

The bridging release beam-switching can be beam-switching to an entity that was the serving beam before beam-bridging or beam-switching to the remaining entity that was not the serving beam before beam-bridging. In one embodiment, if the bridging beam-switching was from the first entity of the beam-switching beam set to the bridging beam, the bridging release beam-switching can be beam-switching from the bridging beam to the first entity of the beam-switching beam set or beam-switching from the bridging beam to the second entity of the beam-switching beam set that was not the serving beam immediately before bridging.

Similarly, if beam-bridging was from the second entity of the beam-switching beam set to the bridging beam, the bridging release beam-switching can be beam-switching from the bridging beam to the second entity of the beam-switching beam set or beam-switching from the bridging beam to the first entity of the beam-switching beam set that was not the serving beam immediately before bridging.

Depending on the beam-switching operation method, during the bridging release beam-switching, a beam-switching can also occur to a directional beam that is not included in the beam-switching beam set.

In other words, during beam-bridging using the bridging beam as a serving beam, beam-bridging can be released by beam-switching to a directional beam not included in the beam-switching beam set, in response to a beam-switching request event from the bridging beam to a directional beam not included in the beam-switching beam set. In one embodiment, beam-bridging can be released by beam-switching from the bridging beam to one of other directional beams in the beam codebook that was not included in the beam-switching beam set immediately before bridging.

In other words, the target directional beam for bridging release beam-switching may not be a component of the beam-switching beam set immediately before bridging. In one embodiment, referring to fig. 19, a beam-switching beam set consists of a first directional beam and a second directional beam, and the first directional beam and the second directional beam are designated as the first entity and the second entity of the beam-switching beam set, respectively. At this time, the bridging release beam-switching can be a beam-switching from the bridging beam to a third directional beam that is neither the first directional beam (the first entity of the beam-switching beam set) nor the second directional beam (the second entity of the beam-switching beam set), but rather a directional beam that is not included in the beam-switching beam set.

Accordingly, the target directional beam for bridging release beam-switching can be set to one of the beam-switching beam set entities immediately before bridging, or to a directional beam not included in the beam-switching beam set immediately before bridging.

*** Beam-switching Process ***

The beam-switching process, when the first entity of the beam-switching beam set is being used as a serving beam, involves deactivating the serving beam (the first entity of the beam-switching beam set), setting the second entity of the beam-switching beam set as an active directional beam, and then designating the second entity as a new serving beam.

Additionally, the first entity of the beam-switching beam set can be maintained in an active state while setting the second entity of the beam-switching beam set as an active directional beam and designating the second entity as a new serving beam.

Additionally, the second entity can first be set as an active directional beam, then the first entity (the serving beam currently in use) can be deactivated and the second entity designated as a new serving beam. Alternatively, the second entity can first be set as an active directional beam and designated as a new serving beam, and then the first entity (the serving beam currently in use) can be deactivated.

Similarly, when the second entity of the beam-switching beam set is being used as a serving beam, the process involves deactivating the second entity, setting the first entity as an active directional beam, and then designating the first entity as a new serving beam.

Additionally, the second entity can be maintained in an active state while setting the first entity as an active directional beam and designating the first entity as a new serving beam.

Additionally, the first entity can first be set as an active directional beam, then the second entity can be deactivated and the first entity designated as a new serving beam. Alternatively, the first entity can first be set as an active directional beam and designated as a new serving beam, and then the second entity can be deactivated.

In this way, in the beam-switching from the serving beam which is the pre-switching directional beam among the beam-switching beam set entities, to the target directional beam for beam-switching, which is the other entity of the beam-switching beam set, the serving beam which is the pre-switching directional beam can be deactivated and then the target directional beam for beam-switching can be set as an active directional beam and designated as a new serving beam, or the target directional beam for beam-switching can be set as an active directional beam and then the serving beam which is the pre-switching directional beam, can be deactivated and then the target directional beam for beam-switching can be designated as a new serving beam, or the target directional beam for beam-switching can be set as an active directional beam and designated as a new serving beam and then the pre-switching directional beam can be deactivated.

*** Bridging Beam-switching Process ***

In the process of bridging beam-switching from a directional beam of one of the beam-switching beam set entities to a bridging beam, when the first entity of the beam-switching beam set is being used as a serving beam and beam-switching is from the first entity of the beam-switching beam set to the bridging beam, the process involves deactivating the first entity of the beam-switching beam set being used as a serving beam, setting the bridging beam as an active directional beam, and then designating the bridging beam as a new serving beam.

Additionally, the first entity of the beam-switching beam set can be maintained in an active state while setting the bridging beam as an active directional beam and designating the bridging beam as a new serving beam. At this time, the bridging beam can first be set as an active directional beam, the first entity of the beam-switching beam set being used as the serving beam can be deactivated, and then designate the bridging beam as a new serving beam, or the bridging beam can first be set as an active directional beam and designated as a new serving beam, and then the first entity of the beam-switching beam set being used as the serving beam can be deactivated.

Similarly, when the second entity of the beam-switching beam set is currently in use as a serving beam and the beam-switching is from the second entity of the beam-switching beam set to the bridging beam, the process involves deactivating the second entity of the beam-switching beam set, setting the bridging beam as an active directional beam, and then designating the bridging beam as a new serving beam. Additionally, the second entity of the beam-switching beam set can be maintained in an active state while setting the bridging beam as an active directional beam and designating the bridging beam as a new serving beam.

At this time, first setting the bridging beam as an active directional beam, deactivating the second entity of the beam-switching beam set, and then designating the bridging beam as a new serving beam, or first setting the bridging beam as an active directional beam, designating the bridging beam as a new serving beam, and then deactivating the second entity of the beam-switching beam set.

In this way, in the beam-switching from a directional beam of one of the beam-switching beam set entities to the bridging beam, the serving beam which is one of the beam-switching beam set entities, can be deactivated, then the bridging beam can be set as an active directional beam and designated as a new serving beam; or the bridging beam can be set as an active directional beam, then the serving beam of the beam-switching beam set can be deactivated, and subsequently the bridging beam can be designated as a new serving beam; or the bridging beam can be set as an active directional beam and designated as a new serving beam, then the serving beam of the beam-switching beam set can be deactivated.

### *** Simultaneous Generation of Directional Beams ***

The antenna part 160 can generate one directional beam among the beam-switching beam set entities and a bridging beam at a specific time point.

The antenna part 160 can simultaneously generate at least two directional beams among the beam-switching beam set entities and a bridging beam at a specific time point.

### *** Beam Generation and Beam Codebook ***

Figs. 20(a), 20(b), and 20(c) show examples of beam codebook configuration. Figs. 21(a) and 21(b) show examples of beam-switching beam set configuration using a beam codebook according to one embodiment. Figs. 22(a) and 22(b) show examples of beam-switching beam set configuration using a beam codebook according to another embodiment.

In a communication system using directional beams, directional beams can be generated and used based on the beam direction and beamwidth being adaptively adjusted according to channel conditions. Additionally, for an implementation convenience, a beam codebook can be prepared in advance, and a directional beam from within the codebook that best matches the channel conditions can be selected.

The beam codebook pre-selects a set of directional beams that can service the communication area and generates a plurality of directional beams by pre-setting beam generation parameters for generating each directional beam that is a component of the set. In a communication system using a beam codebook, a directional beam from within the codebook that best matches the channel conditions is selected for use. As one example, referring to fig. 20(a), when the number of directional beams is 4, the set of directional beams constituting the beam codebook can be defined as such

$$\Phi_1 = [\varphi_1^{(1)}, \varphi_2^{(1)}, \varphi_3^{(1)}, \varphi_4^{(1)}]$$ .

Here, $\varphi_i^{(1)}$ represents the i-th component directional beam of the first beam codebook $\Phi_1$. At this time, the beamwidth of each directional beam constituting the beam codebook can be set to be either the same or different from each other.

As another example, referring to figs. 20(b) and 20(c), when increasing the number of directional beams in the beam codebook to 8 and 16 respectively, the set of directional beams constituting the beam codebook can be defined such as

$$\Phi_2 = [\varphi_1^{(2)}, \varphi_2^{(2)}, \varphi_3^{(2)}, \varphi_4^{(2)}, ..., \varphi_7^{(2)}, \varphi_8^{(2)}]$$ and

$$\Phi_3 = [\varphi_1^{(3)}, \varphi_2^{(3)}, \varphi_3^{(3)}, \varphi_4^{(3)}, ..., \varphi_{15}^{(3)}, \varphi_{16}^{(3)}]$$ , respectively.

The beam-switching beam set using the beam codebook can be constructed with components (directional beams) of the beam codebook corresponding to adjacent directions, or with components (directional beams) of the beam codebook corresponding to non-adjacent directions.

As one example, referring to figs. 21(a) and 21(b), as shown in fig. 21(a), a beam-switching beam set can be constructed using $\varphi_1^{(3)}$ and $\varphi_{16}^{(3)}$ as components corresponding to adjacent directions in the third beam codebook $\Phi_3$ consisting of 16 directional beams. As shown in fig. 21(b), a beam-switching beam set can be constructed using $\varphi_1^{(3)}$ and $\varphi_{15}^{(3)}$ as components corresponding to non-adjacent directions.

When constructing a beam-switching beam set with directional beams corresponding to adjacent directions, the beam region of the bridging beam can be set to sufficiently cover the boundary region between the beam-switching beam set entities by setting the direction and beamwidth of the bridging beam to eliminate edge effects between the beam-switching beam set entities.

Additionally, when constructing a beam-switching beam set with directional beams corresponding to non-adjacent directions, the direction and beamwidth of the bridging beam can be set to connect the beam regions of the non-adjacent directional beams. In one embodiment,, referring to (a) of fig. 21, the direction and beamwidth of the bridging beam can be set to completely eliminate edge effects by sufficiently including the boundary region between $\varphi_1^{(3)}$ and $\varphi_{16}^{(3)}$ corresponding to adjacent directions. Also, referring to (b) of fig. 21, the direction and beamwidth of the bridging beam can be set to sufficiently cover the gap between the beam-switching beam set entities caused by the beam-switching beam set entities $\varphi_1^{(3)}$ and $\varphi_{15}^{(3)}$ corresponding to non-adjacent directions and to connect the beam regions of non-adjacent beam-switching beam set entities.

### *** Bridging Beam Generation ***

In generating a bridging beam covering the boundary region between the direction of the first entity of the beam-switching beam set and the direction of the second entity of the beam-switching beam set, the beam codebook in use can be designated as the main beam codebook, and another auxiliary beam codebook different from the main beam codebook can be provided. The bridging beam then can be generated by selecting a component (directional beam) from the auxiliary beam codebook, that can cover the boundary region between the first entity and second entity of the beam-switching beam set.

At this time, each component of the auxiliary beam codebook should be designed with direction and beamwidth that can cover the corresponding boundary region between components of the main codebook. As one example, referring to (a) and (b) of fig. 22, the reference communication device 100 has the main beam codebook $\Phi_3$ ((a) of fig. 22) consisting of 16 directional beams, and constructs a beam-switching beam set consisting of $\varphi_1^{(3)}$ and $\varphi_{16}^{(3)}$ as components corresponding to adjacent directions. Here, when the auxiliary beam codebook $\Phi_5$ ((b) of fig. 22) also consisting of 16 directional beams is provided, a bridging beam can be generated by selecting $\varphi_1^{(5)}$ among components of the auxiliary beam codebook $\Phi_5$ in (b) of fig. 22 to sufficiently cover the boundary region between entities ( $\varphi_1^{(3)}$ and $\varphi_{16}^{(3)}$ ) of the beam-switching beam set and then beam generation parameters to generate the bridging beam as shown in fig. 22 (a) are applied to the antenna part 160.

As one example, in (b) of fig. 22, it can be seen that each component of the auxiliary beam codebook is configured to cover the corresponding boundary region between components of the main codebook.

Additionally, it is possible to control to adaptively generate a bridging beam that covers the boundary region between beam-switching beam set entities according to a predefined rule. At this time, in generating the bridging beam according to a predefined rule, the direction and beamwidth of the bridging beam can be determined according to the predefined rule, and based on the determined direction and beam width, beam generation parameters according to the antenna array (155) structure of the antenna unit (160) can be applied to control the generation of the bridging beam.

At this time, the antenna array 155 structure can be either an array antenna structure or a parasitic array structure, and the application of beam generation parameters can be either phase adjustment or simultaneous adjustment of gain and phase of each element of the array antenna in case of the array antenna structure, or selection of at least one of predetermined beam spaces or adjustment of parameters to control the operation of passive elements of the parasitic array for synthesizing a desired beam in case of the parasitic array structure.

Thus, in generating the bridging beam, firstly the direction and beam width of the bridging beam are determined, and then based on the direction and beam width of the bridging beam, a directional beam corresponding to the bridging beam is generated by applying beam generation parameters according to the antenna array structure to the antenna unit (160).. Also, in determining the direction and beam width of the bridging beam, the beam codebook in use is designated as the main beam codebook, and an auxiliary beam codebook different from the main beam codebook is provided, and a directional beam having a direction positioned between the direction of the first entity of the beam-switching beam set and the direction of the second entity of the beam-switching beam set is selected from the auxiliary beam codebook to determine the direction and beamwidth of the bridging beam;; or the direction and beamwidth of the bridging beam can be determined to cover the boundary region between the first entity and second entity of the beam-switching beam set according to a predefined rule.

### *** Bridging Beam-switching Method ***

Figure 23 is a flowchart of a bridging beam-switching method according to an embodiment.

According to one embodiment, a bridging beam-switching method is a method performed by a beam-switching apparatus including an antenna part configured to generate a plurality of directional beams, a transceiver part configured to supply signals to or receive signals from the antenna part, and a control part controlling directional beam generation of the antenna part and signal transmission/reception of the transceiver part. The method comprises: constructing a beam-switching beam set (S2310) including a first entity being the pre-switching directional beam and a second entity being the target directional beam for beam-switching among a plurality of directional beams that can be generated through the antenna part; generating a bridging beam (S2320) covering the boundary region between the first entity and the second entity of the beam-switching beam set; and switching (S2330) from either the first entity or second entity of the beam-switching beam set to the generated bridging beam.

The step of constructing a beam-switching beam set (S2310) is a step of constructing a beam-switching beam set including the first entity and second entity participating in beam-switching among a plurality of directional beams generated from the antenna part to perform the bridging beam-switching method according to the embodiment. For example, the first entity can be the pre-switching directional beam, and the second entity can be the target directional beam for beam-switching.

The step of generating a bridging beam (S2320) is a step of generating a bridging beam that can cover the boundary region between the first entity and second entity of the beam-switching beam set including the first entity and second entity. For example, the first entity can be the pre-switching directional beam, and the second entity can be the target directional beam for beam-switching.

The step of switching to the bridging beam (S2330) is a step of switching from either the first entity or second entity of the beam-switching beam set to the generated bridging beam. For example, both the first entity and second entity can be deactivated during beam-bridging (in other words, while using the generated bridging beam as a serving beam).

Additionally, the step of switching to the bridging beam (S2330) can include either: deactivating the serving beam which is one of the first entity and second entity of the beam-switching beam set, setting the bridging beam as an active directional beam, and then designating the bridging beam as a new serving beam; or setting the bridging beam as an active directional beam, deactivating the serving beam which is one of the first entity and second entity of the beam-switching beam set, and then designating the bridging beam as a new serving beam; or setting the bridging beam as an active directional beam, designating the bridging beam as a new serving beam, and then deactivating the serving beam which is one of the first entity and second entity of the beam-switching beam set. For example, the first entity can be the pre-switching directional beam, and the second entity can be the target directional beam for beam-switching.

Fig. 24 is a flowchart of a bridging beam-switching method according to another embodiment.

According to another embodiment, after the step of switching to the bridging beam (S2330), a beam-bridging release step (S2340) can be further included. The beam-bridging release step (S2340) is either: a step of releasing beam-bridging through switching from the bridging beam to one of the beam-switching beam set entities, in response to a beam-switching request event from the bridging beam to one of the beam-switching beam set entities during beam bridging using the bridging beam as a serving beam; or a step of releasing beam-bridging through switching from the bridging beam to a directional beam not included in the beam-switching beam set, in response to a beam-switching request event from the bridging beam to a directional beam not included in the beam-switching beam set during beam bridging using the bridging beam as a serving beam.

Fig. 25 is a flowchart detailing the step of bridging beam generation in fig. 23.

The step of generating a bridging beam (S2320) can include: a step of determining a direction and beamwidth of the bridging beam (S2322) and a step of generating a directional beam (S2324) based on the determined direction and beamwidth of the bridging beam, by applying beam generation parameters corresponding to an antenna array structure to the antenna part.

Additionally, the step of generating a bridging beam (S2320) includes: a step of determining a direction and beamwidth of the bridging beam (S2322) and a step of generating a directional beam (S2324) based on the determined bridging beam direction and beamwidth, by applying beam generation parameters corresponding to an antenna array structure to the antenna part. In the step (S2322) of determining the direction and beamwidth based on the determined direction and beamwidth of the bridging beam, either: designate the beam codebook in use as the main beam codebook, provide an auxiliary beam codebook different from the main beam codebook, and determine a direction and beamwidth of the bridging beam by selecting a directional beam covering the boundary region between the first entity and the second entity of the beam-switching beam set from the auxiliary beam codebook; or determine the direction and beamwidth of the bridging beam to cover the boundary region between the first entity and the second entity of the beam-switching beam set according to a predefined rule., the direction and beam width of the bridging beam can be determined to cover the boundary region between the first entity and the second entity.

Additionally, the bridging beam-switching can be characterized as an operation in response to a ping-pong beam-switching request event between the beam-switching beam set entities.

Additionally, the bridging beam can be characterized as a directional beam whose direction and beamwidth are set to eliminate beam-edge effects and/or occurrence of ping-pong beam-switching request events in the boundary region between the beam-switching beam set entities.

Additionally, a direction of the bridging beam can be characterized as: positioned between a direction of the first entity of the beam-switching beam set and a direction of the second entity of the beam-switching beam set; or positioned at a boundary direction between the first entity and the second entity; or positioned at an intermediate direction between a direction of the first entity and a direction of the second entity ; or positioned closer to either a direction of the first entity and a direction of the second entity; or positioned at a direction between a direction of the first entity and a direction of the second entity according to a predefined rule.

Additionally, a beamwidth of the bridging beam can be characterized as: covering the boundary region between a direction of the first entity and a direction of the second entity of the beam-switching beam set, and having either the same value as one of a beamwidth of the first entity and a beamwidth of the second entity of the beam-switching beam set; or having a value between a beamwidth of the first entity and a beamwidth of the second entity; or having a value larger than the larger value of a beamwidth of the first entity and a beamwidth of the second entity; or having a value smaller than the smaller value of a beamwidth of the first entity and a beamwidth of the second entity.

The description of this specification is for illustration, and those skilled in the art will understand that various modifications in form and details may be made without departing from the technical idea or essential characteristics. Therefore, the embodiments described above should be considered in all aspects as illustrative and not restrictive.

The scope of this specification is indicated by the claims described below rather than the detailed description above, and it should be interpreted that all changes or modified forms derived from the meaning and scope of the claims and their equivalent concepts are included in the scope of this specification.

**Claims**

1. A bridging beam-switching apparatus for switching directional beams, comprising:

   an antenna part configured to generate a plurality of directional beams;
   a transceiver part configured to supply signals to or receive signals from the antenna part; and
   a control part configured to control directional beam generation of the antenna part and signal transmission/reception of the transceiver part;
   wherein the control part:

   constructs a beam-switching beam set participating in beam-switching, that includes a first entity being a pre-switching directional beam and a second entity being a target directional beam for beam-switching, among a plurality of directional beams that can be generated through the antenna part,
   generates a bridging beam covering the boundary region between the first entity and the second entity of the beam-switching beam set, and
   switches from either the first entity or the second entity of the beam-switching beam set to the generated bridging beam.

2. The bridging beam-switching apparatus of claim 1, wherein the bridging beam-switching is an operation in response to a ping-pong beam-switching request event between the beam-switching beam set entities,

   wherein the ping-pong beam-switching request event is either:

   an event in which mutual beam-switching requests between the beam-switching beam set entities of a preset count of at least 2 occur, without beam-switching to a directional beam not included in the beam-switching beam set within a preset time; or
   an event in which alternating beam-switching requests between the beam-switching beam set entities of a preset count of at least 1 occur, and
   the count of alternating beam-switching requests between the beam-switching beam set entities is one less than the count of mutual beam-switching requests occurring between the beam-switching beam set entities regardless of switching direction, without beam-switching to a directional beam not included in the beam-switching beam set within the preset time.

3. The bridging beam-switching apparatus of claim 1, wherein the bridging beam is a directional beam whose direction and beamwidth are set to eliminate beam-edge effects and/or occurrence of ping-pong beam-switching request events, in the boundary region between the beam-switching beam set entities.

4. The bridging beam-switching apparatus of claim 1, wherein a direction of the bridging beam is: positioned between a direction of the first entity of the beam-switching beam set and a direction of the second entity of the beam-switching beam set; or

   positioned at a boundary direction between the first entity and the second entity; or
   positioned at an intermediate direction between a direction of the first entity and a direction of the second entity; or
   positioned at a direction closer to either a direction of the first entity or a direction of the second entity; or
   positioned at a direction between a direction of the first entity and a direction of the second entity according to a predefined rule,
   wherein the boundary direction between the first entity and the second entity is:

   a direction of directional angle where a directional gain of the first entity and a directional gain of the second entity becomes identical; or
a direction corresponding to the boundary of the first entity; or
a direction corresponding to the boundary of the second entity.

5. The bridging beam-switching apparatus of claim 1, wherein a beamwidth of the bridging beam:

covers the boundary region between the first entity and the second entity of the beam-switching beam set, and has either the same value as one of a beamwidth of the first entity of the bean-switching beam set and a beamwidth of the second entity of the beam-switching beam set; or
has a value between a beamwidth of the first entity and a beamwidth of the second entity; or
has a value larger than the larger value of a beamwidth of the first entity and a beamwidth of the second entity; or
has a value smaller than the smaller value of a beamwidth of the first entity and a beamwidth of the second entity.

6. The bridging beam-switching apparatus of claim 3, wherein the direction of the bridging beam or the beamwidth of the bridging beam is determined based on at least one of:
a ping-pong beam-switching request event count per unit time, a movement speed (including a velocity), a relative movement speed (including a relative velocity), a distance between communication devices, a range of directional angle due to movement during a predetermined period, and a relative range of directional angle due to movement.

7. The bridging beam-switching apparatus of claim 1, wherein during beam-bridging while using the bridging beam as a serving beam:

releases beam-bridging by switching from the bridging beam to one of the beam-switching beam set entities, in response to a beam-switching request event from the bridging beam to one of the beam-switching beam set entities; or
releases beam-bridging by switching from the bridging beam to a directional beam not included in the beam-switching beam set, in response to a beam-switching request event from the bridging beam to a directional beam not included in the beam-switching beam set.

8. The bridging beam-switching apparatus of claim 1, wherein each entity of the beam-switching beam set is:
a component of a beam codebook consisting of a plurality of directional beams that can be generated through the antenna part, and
the first entity and the second entity of the beam-switching beam set are either component of the beam codebook corresponding to directions adjacent to each other, or components of the beam codebook corresponding to directions non-adjacent to each other.

9. The bridging beam-switching apparatus of claim 1, wherein in generating the bridging beam:

determines a direction and a beamwidth of the bridging beam,
generates a directional beam based on the determined direction and beamwidth of the bridging beam by applying beam generation parameters corresponding to an antenna array structure of the antenna part, and
in determining the direction and beamwidth of the bridging beam, either:

designates a beam codebook in use as a main beam codebook, provides an auxiliary beam codebook different from the main beam codebook, and determines the direction and beamwidth of the bridging beam by selecting a directional beam covering the boundary region between the first entity and the second entity, from the auxiliary beam codebook; or
determines a direction and a beamwidth of the bridging beam to cover the boundary region between the first entity and the second entity according to a predefined rule,
wherein the antenna array structure of the antenna part is either an array antenna structure or a parasitic array structure, and the application of the beam generation parameters:

for the array antenna structure case, is either adjustment of phase or simultaneous adjustment of gain and phase for each of individual array antenna elements; and
for the parasitic array structure case, is either selection of at least one of predetermined beam spaces or adjustment of parameters controlling operation of passive elements of the parasitic array for synthesizing a desired beam.

10. A bridging beam-switching method performed by a beam-switching apparatus including an antenna part configured to generate a plurality of directional beams, a transceiver part configured to supply signals to or receive signals from the antenna part, and a control part controlling directional beam generation of the antenna part and signal transmission/reception of the transceiver part, the method comprising:

constructing a beam-switching beam set participating in beam-switching, that includes a first entity being a pre-switching directional beam and a second entity being a target directional beam for beam-switching, among a plurality of directional beams that can be generated through the antenna part;

generating a bridging beam covering the boundary region between the first entity and the second entity of the beam-switching beam set; and

switching from either the first entity or the second entity of the beam-switching beam set to the generated bridging beam.

11. The bridging beam-switching method of claim 10, wherein the bridging beam-switching is an operation in response to a ping-pong beam-switching request event between the beam-switching beam set entities, and

wherein the bridging beam is a directional beam whose direction and beamwidth are set to eliminate beam-edge effects and/or occurrence of ping-pong beam-switching request events in the boundary region between the beam-switching beam set entities.

12. The bridging beam-switching method of claim 10, wherein a direction of the bridging beam is:

positioned between a direction of the first entity of the beam-switching beam set and a direction of the second entity of the beam-switching beam set; or

positioned at a boundary direction between the first entity and the second entity; or

positioned at an intermediate direction between a direction of the first entity and a direction of the second entity; or

positioned at a direction closer to either a direction of the first entity or a direction of the second entity; or

positioned at a direction between a direction of the first entity and a direction of the second entity according to a predefined rule,

wherein a beamwidth of the bridging beam:

covers the boundary region between the first entity and the second entity of the beam-switching beam set, and

has either the same value as one of a beamwidth of the first entity of the beam-switching beam set and a beamwidth of the second entity of the beam-switching beam set; or

has a value between a beamwidth of the first entity and a beamwidth of the second entity;

or

has a value larger than the larger value of a beamwidth of the first entity and a beamwidth of the second entity; or

has a value smaller than the smaller value of a beamwidth of the first entity and a beamwidth of the second entity.

13. The bridging beam-switching method of claim 10, after beam-switching to the bridging beam:

releases beam-bridging by switching from the bridging beam to one of the beam-switching beam set entities, in response to a beam-switching request event from the bridging beam to one of the beam-switching beam set entities during beam-bridging while using the bridging beam as a serving beam; or

releases beam-bridging by switching from the bridging beam to a directional beam not included in the beam-switching beam set, in response to a beam-switching request event from the bridging beam to a directional beam not included in the beam-switching beam set during beam-bridging while using the bridging beam as a serving beam.

14. The bridging beam-switching method of claim 10, wherein generating the bridging beam comprises:

determining a direction and a beamwidth of the bridging beam; and

generating a directional beam based on the determined direction and beamwidth of the bridging beam by applying beam generation parameters corresponding to an antenna array structure of the antenna part;

wherein determining the direction and beamwidth of the bridging beam comprises:

designating a beam codebook in use as a main beam codebook and providing an auxiliary beam codebook different from the main beam codebook;

determining the direction and beamwidth of the bridging beam by selecting a directional beam covering the boundary region between the first entity and the second entity, from the auxiliary beam codebook; or

determining a direction and a beamwidth of the bridging beam to cover the boundary region between the first entity and the second entity according to a predefined rule.

15. The bridging beam-switching method of claim 10, wherein beam-switching to the bridging beam comprises:

deactivating a serving beam in use among the beam-switching beam set entities, setting the bridging beam as an active directional beam, and then designating the bridging beam as a new serving beam; or

setting the bridging beam as an active directional beam, deactivating a serving beam in use, and then designating the bridging beam as a new serving beam; or

setting the bridging beam as an active directional beam, designating the bridging beam as a new serving beam, and then deactivating a serving beam in use.

16. The bridging beam-switching method of claim 13, wherein the bridging beam-switching is an operation in response to a ping-pong beam-switching request event between the beam-switching beam set entities, and

wherein the bridging beam is a directional beam whose direction and beamwidth are set to eliminate beam-edge effects and/or occurrence of ping-pong beam-switching request events in the boundary region between the beam-switching beam set entities.

# FIG. 1

Region of
directional beam

Direction of
directional beam

$P_1$

$\theta$

$P_2$

−3 dB   0 dB

# FIG. 2

(a)

2$^{nd}$ region of directional beam

1$^{st}$ region of directional beam

3$^{rd}$ region of directional beam

(b)

2$^{nd}$ region of directional beam

1$^{st}$ region of directional beam

3$^{rd}$ region of directional beam

(c)

2$^{nd}$ region of directional beam

1$^{st}$ region of directional beam

3$^{rd}$ region of directional beam

# FIG. 3

EP 4 622 129 A1

**FIG. 4**

# FIG. 5

# FIG. 6

(a)

Individual
dual-polarization
antenna element

(b)

sub-antenna
array

# FIG. 7

120 140 160

control part

transceiver part

SPA

# FIG. 8

# FIG. 9

# FIG. 10

## FIG. 11

100

200

reference communication device

first directional beam

second directional beam

target communication device

# FIG. 12

# FIG. 13

# FIG. 14

100

200

reference communication device

target communication device

first directional beam

bridging beam

second directional beam

EP 4 622 129 A1

FIG. 15

43

## FIG. 16

# FIG. 17

(a)

(b)

# FIG. 18

100

reference communication device

first directional beam

bridging beam

second directional beam

200

target communication device

(a)

100

reference communication device

first directional beam

bridging beam

second directional beam

200

target communication device

(b)

# FIG. 18

(a)

(b)

# FIG. 19

## FIG. 20

$\Phi_1$

$\varphi_2^{(1)}$ $\varphi_1^{(1)}$
$\varphi_3^{(1)}$ $\varphi_4^{(1)}$

$\Phi_2$

$\varphi_3^{(2)}$ $\varphi_2^{(2)}$
$\varphi_4^{(2)}$ $\varphi_1^{(2)}$
$\varphi_5^{(2)}$ $\varphi_8^{(2)}$
$\varphi_6^{(2)}$ $\varphi_7^{(2)}$

$\Phi_3$

$\varphi_6^{(3)}\varphi_5^{(3)}$ $\varphi_4^{(3)}$
$\varphi_7^{(3)}$ $\varphi_3^{(3)}$
$\varphi_8^{(3)}$ $\varphi_2^{(3)}$
$\varphi_9^{(3)}$ $\varphi_1^{(3)}$
$\varphi_{10}^{(3)}$ $\varphi_{16}^{(3)}$
$\varphi_{11}^{(3)}$ $\varphi_{15}^{(3)}$
$\varphi_{12}^{(3)} \varphi_{13}^{(3)}\varphi_{14}^{(3)}$

(a)  (b)  (c)

FIG. 21

(a)

(b)

# FIG. 22

(a)                    (b)

# FIG. 23

constructing a beam-switching beam set including a first entity being the pre-switching directional beam and a second entity being the target directional beam among a plurality of directional beams that can be generated through the antenna part ——S2310

generating a bridging beam covering the boundary region between the first entity and the second entity of the beam-switching beam set ——S2320

switching from either the first entity or second entity of the beam-switching beam set to the generated bridging beam ——S2330

# FIG. 24

constructing a beam-switching beam set including a first entity being the pre-switching directional beam and a second entity being the target directional beam for beam-switching among a plurality of directional beams that can be generated through the antenna part ——S2310

generating a bridging beam covering the boundary region between the first entity and the second entity of the beam-switching beam set ——S2320

switching from either the first member or second member of the beam-switching beam set to the generated bridging beam ——S2330

releasing beam-bridging ——S2340

# FIG. 25

determining a direction and beamwidth of the bridging beam —S2322

generating a directional beam based on the determined direction and beamwidth of the bridging beam, by applying beam generation parameters corresponding to an antenna array structure of the antenna part —S2324

**EUROPEAN SEARCH REPORT**

Application Number

EP 25 16 4559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/023401 A1 (GRANDHI SUDHEER A [US] ET AL) 22 January 2009 (2009-01-22) * claims 8,10,11 * | 1-16 | INV. H04B7/0456 H04B7/06 |
| X | US 2007/249402 A1 (DONG MIN [US] ET AL) 25 October 2007 (2007-10-25) * paragraphs [0032], [0033], [0054], [0056]; claims 1,4,7 * | 1-16 | |
| A | US 2018/084441 A1 (NAGARAJA SUMEETH [US] ET AL) 22 March 2018 (2018-03-22) * paragraph [0165] * | 2 | |
| A | US 2020/235800 A1 (TANG XIN [US] ET AL) 23 July 2020 (2020-07-23) * claims 1-6 * | 6 | |

**TECHNICAL FIELDS SEARCHED (IPC)**

H04B

The present search report has been drawn up for all claims

| Place of search | Date of completion of the search | Examiner |
|---|---|---|
| Munich | 1 July 2025 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 16 4559

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| US 2009023401 | A1 | 22-01-2009 | CA | 2555992 A1 | 25-08-2005 |
| | | | CN | 101411224 A | 15-04-2009 |
| | | | EP | 1719262 A2 | 08-11-2006 |
| | | | JP | 4425927 B2 | 03-03-2010 |
| | | | JP | 4977732 B2 | 18-07-2012 |
| | | | JP | 2007525119 A | 30-08-2007 |
| | | | JP | 2009159646 A | 16-07-2009 |
| | | | KR | 20060120265 A | 24-11-2006 |
| | | | KR | 20060121965 A | 29-11-2006 |
| | | | TW | I264888 B | 21-10-2006 |
| | | | US | 2005200524 A1 | 15-09-2005 |
| | | | US | 2009023401 A1 | 22-01-2009 |
| | | | WO | 2005076841 A2 | 25-08-2005 |
| US 2007249402 | A1 | 25-10-2007 | AT | E551854 T1 | 15-04-2012 |
| | | | BR | PI0711259 A2 | 30-08-2011 |
| | | | CA | 2648568 A1 | 01-11-2007 |
| | | | CA | 2780755 A1 | 01-11-2007 |
| | | | CN | 101427595 A | 06-05-2009 |
| | | | EP | 2008484 A1 | 31-12-2008 |
| | | | EP | 2334112 A1 | 15-06-2011 |
| | | | ES | 2381286 T3 | 24-05-2012 |
| | | | ES | 2398898 T3 | 22-03-2013 |
| | | | JP | 5917469 B2 | 18-05-2016 |
| | | | JP | 6133389 B2 | 24-05-2017 |
| | | | JP | 2009534954 A | 24-09-2009 |
| | | | JP | 2014057316 A | 27-03-2014 |
| | | | JP | 2016076968 A | 12-05-2016 |
| | | | KR | 20090008373 A | 21-01-2009 |
| | | | RU | 2008145743 A | 27-05-2010 |
| | | | TW | 200803235 A | 01-01-2008 |
| | | | US | 2007249402 A1 | 25-10-2007 |
| | | | US | 2012020316 A1 | 26-01-2012 |
| | | | WO | 2007124460 A1 | 01-11-2007 |
| US 2018084441 | A1 | 22-03-2018 | AU | 2017326452 A1 | 28-02-2019 |
| | | | BR | 112019004624 A2 | 18-06-2019 |
| | | | CA | 3033274 A1 | 22-03-2018 |
| | | | CN | 109716672 A | 03-05-2019 |
| | | | EP | 3513505 A1 | 24-07-2019 |
| | | | ES | 2866940 T3 | 20-10-2021 |
| | | | JP | 6978494 B2 | 08-12-2021 |
| | | | JP | 2019534605 A | 28-11-2019 |
| | | | US | 2018084441 A1 | 22-03-2018 |
| | | | WO | 2018053339 A1 | 22-03-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 16 4559

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| US 2020235800 A1 | 23-07-2020 | NONE | |

For more details about this annex : see Official Journal of the European Patent Office, No. 12/82

page 2 of 2

**EP 4 622 129 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020040059657